# EUROPEAN PATENT APPLICATION

(11) **EP 3 168 714 A1**
(43) Date of publication of application: **17.05.2017**
(21) Application number: 16173786.1
(22) Date of filing: 09.06.2016
(51) Int. Cl.: G06F 3/02, G06F 17/27, G06F 3/023, G06F 1/16, H01H 13/00, H04M 1/22, G06F 3/0489

(54) **METHOD, DEVICE AND SYSTEM FOR INPUTTING CHARACTER**

(30) Priority: 13.11.2015 CN 201510777567
(71) Applicant: Xiaomi Inc., Beijing 100085 (CN)
(72) Inventor: WANG, Ke, 100085 Beijing (CN); LIU, Jianquan, 100085 Beijing (CN); WANG, Le, 100085 Beijing (CN)
(74) Representative: Sackin, Robert

(57) **Abstract**

The present disclosure relates to a method, a device and a system for inputting character, and belongs to the field of electronic technique application. The method comprises: receiving a first character input by a user (201); determining a second character set correlated with the first character, the second character set comprising at least one second character (202); inquiring a corresponding relationship between a character and a key identifier to obtain a target key identifier corresponding to each second character (203); controlling a key light corresponding to a target key indicated by the target key identifier to emit a light with a preset color, the light with the preset color for prompting the user to input character (204). The problems of low inputting efficiency and input error in the related art are solved, and thus effects of improving the inputting efficiency and avoiding the input error are achieved. The present disclosure is for input prompt.

## Description

### TECHNICAL FIELD

The present disclosure generally relates to the field of electronic technique application, and more particularly, to a method, a device and a system for inputting character.

### BACKGROUND

The keyboard, which is a common inputting device used in the terminal, may achieve a human-computer interaction between user and terminal, and thus the user may input characters, such as letters, numbers, Chinese characters, and punctuation marks, into the terminal via the keyboard.

### SUMMARY

In order to achieve effects of improving an inputting efficiency and avoiding an input error, the present disclosure provides a method, a device and a system for inputting character.

According to a first aspect of embodiments of the present disclosure, there is provided a method for inputting character, including:
receiving a first character input by a user;
determining a second character set correlated with the first character, the second character set including at least one second character;
inquiring a corresponding relationship between a character and a key identifier to obtain a target key identifier corresponding to each second character;
controlling a key light corresponding to a target key indicated by the target key identifier to emit a light with a preset color, the light with the preset color for prompting the user to input character.

Alternatively, determining a second character set correlated with the first character, the second character set including at least one second character, includes:
determining a target word-stock, the target word-stock being a word-stock corresponding to an input method currently used by the user or a word-stock established by words input by the user, and the target word-stock for recording a correlation relationship between different characters;
obtaining the second character set by inquiring the target word-stock according to the first character.

Alternatively, the method further includes:
receiving a third character input by the user;
judging whether a character identical to the third character exists in the second character set;
updating the target word-stock according to the first character and the third character, if the character identical to the third character does not exist in the second character set.

Alternatively, updating the target word-stock according to the first character and the third character, includes:
sending an enquiry request to a server, the enquiry request including an item to be inquired consisting of the first character and the third character arranged in sequence;
receiving an enquiry response sent from the server, the enquiry response generated by inquiring a word-stock in the server by the server;
recording a correlation relationship between the first character and the third character in the target word-stock, if the enquiry response indicates that the item to be inquired exists in the word-stock in the server.

Alternatively, updating the target word-stock according to the first character and the third character, includes:
displaying update promoting information to the user;
receiving an update instruction triggered by the user according to the update promoting information, the update instruction including an item to be inquired consisting of the first character and the third character arranged in sequence;
recording a correlation relationship between the first character and the third character in the target word-stock.

Alternatively, controlling a key light corresponding to a target key indicated by the target key identifier to emit a light with a preset color, includes:
controlling the key light corresponding to the target key indicated by the target key identifier on and to emit the light with the preset color;
controlling key lights corresponding to keys on a keyboard other than the target key off.

Alternatively, keys on a keyboard comprise function keys, and controlling a key light corresponding to a target key indicated by the target key identifier to emit a light with a preset color, includes:
controlling the key light corresponding to the target key indicated by the target key identifier to emit a light with a first preset color;
controlling key lights corresponding to the function keys to emit a light with a second preset color;
controlling key lights corresponding to keys on a keyboard other than the target key and the function keys to emit a light with a third preset color;
in which the first preset color, the second preset color and the third preset color are different from each other.

Alternatively, keys on a keyboard include function keys, and controlling a key light corresponding to a target key indicated by the target key identifier to emit a light with a preset color, includes:
controlling the key light corresponding to the target key indicated by the target key identifier to emit a light with a first preset color;
controlling key lights corresponding to the function keys to emit a light with a second preset color;
controlling key lights corresponding to keys on a keyboard other than the target key and the function keys off;
in which the first preset color is different from the second preset color.

Alternatively, controlling a key light corresponding to a target key indicated by the target key identifier to emit a light with a preset color, includes:
controlling the key light corresponding to the target key indicated by the target key identifier to emit the light with the preset color and to flash.

Alternatively, the second character set includes at least two second characters, controlling a key light corresponding to a target key indicated by the target key identifier to emit a light with a preset color, includes:
determining a correlation degree between each second character and the first character respectively to obtain at least two correlation degrees;
controlling a key light corresponding to a target key indicated by a target key identifier corresponding to each second character to emit the light with the preset color;
in which a strength of a light emitted by a key light corresponding to any one target key is positively correlated with the correlation degree between a second character corresponding to the any one target key and the first character.

Alternatively, the second character set includes at least two second characters, the at least two second characters are arranged in sequence,
controlling a key light corresponding to a target key indicated by the target key identifier to emit a light with a preset color, includes:
controlling a key light corresponding to a target key indicated by a target key identifier corresponding to each second character to emit the light with the preset color in sequence according to an arrange sequence of the at least two second characters.

According to a second aspect of embodiments of the present disclosure, there is provided a method for inputting character, including:
receiving a key light on instruction, the key light on instruction including a second character in a second character set correlated with a first character and determined according to the first character input by a user, and the second character set including at least one second character;
inquiring a corresponding relationship between a character and a key identifier according to the key light on instruction to obtain a target key identifier corresponding to each second character;
controlling a key light corresponding to a target key indicated by the target key identifier to emit a light with a preset color, the light with the preset color for prompting the user to input character.

Alternatively, controlling a key light corresponding to a target key indicated by the target key identifier to emit a light with a preset color, includes:
controlling the key light corresponding to the target key indicated by the target key identifier on and to emit the light with the preset color;
controlling key lights corresponding to keys on a keyboard other than the target key off.

Alternatively, keys on a keyboard include function keys, and controlling a key light corresponding to a target key indicated by the target key identifier to emit a light with a preset color, includes:
controlling the key light corresponding to the target key indicated by the target key identifier to emit a light with a first preset color;
controlling key lights corresponding to the function keys to emit a light with a second preset color;
controlling key lights corresponding to keys on a keyboard other than the target key and the function keys to emit a light with a third preset color;
in which the first preset color, the second preset color and the third preset color are different from each other.

Alternatively, keys on a keyboard include function keys, and controlling a key light corresponding to a target key indicated by the target key identifier to emit a light with a preset color, includes:
controlling the key light corresponding to the target key indicated by the target key identifier to emit a light with a first preset color;
controlling key lights corresponding to the function keys to emit a light with a second preset color;
controlling key lights corresponding to keys on a keyboard other than the target key and the function keys off;
in which the first preset color is different from the second preset color.

Alternatively, controlling a key light corresponding to a target key indicated by the target key identifier to emit a light with a preset color, includes:
controlling the key light corresponding to the target key indicated by the target key identifier to emit the light with the preset color and to flash.

Alternatively, the second character set includes at least two second characters,
controlling a key light corresponding to a target key indicated by the target key identifier to emit a light with a preset color, includes:
determining a correlation degree between each second character and the first character respectively to obtain at least two correlation degrees;
controlling a key light corresponding to a target key indicated by a target key identifier corresponding to each second character to emit the light with the preset color;
in which a strength of a light emitted by a key light corresponding to any one target key is positively correlated with the correlation degree between a second character corresponding to the any one target key and the first character.

Alternatively, the second character set includes at least two second characters, the at least two second characters are arranged in sequence,
controlling a key light corresponding to a target key indicated by the target key identifier to emit a light with a preset color, includes:
controlling a key light corresponding to a target key indicated by a target key identifier corresponding to each second character to emit the light with the preset color in sequence according to an arrange sequence of the at least two second characters.

According to a third aspect of embodiments of the present disclosure, there is provided a method for inputting character, including:
receiving a first character input by a user;
determining a second character set correlated with the first character, the second character set including at least one second character;
sending a key light on instruction, the key light on instruction including a second character in the second character set, such that a keyboard inquiries a corresponding relationship between a character and a key identifier to obtain a target key identifier corresponding to each second character according to the key light on instruction, and controls a key light corresponding to a target key indicated by the target key identifier to emit a light with a preset color, the light with the preset color for prompting the user to input character.

Alternatively, determining a second character set correlated with the first character, the second character set including at least one second character, includes:
determining a target word-stock, the target word-stock being a word-stock corresponding to an input method currently used by the user or a word-stock established by words input by the user, and the target word-stock for recording a correlation relationship between different characters;
obtaining the second character set by inquiring the target word-stock according to the first character.

Alternatively, the method further includes:
receiving a third character input by the user;
judging whether a character identical to the third character exists in the second character set;
updating the target word-stock according to the first character and the third character, if the character identical to the third character does not exist in the second character set.

Alternatively, updating the target word-stock according to the first character and the third character, includes:
sending an enquiry request to a server, the enquiry request including an item to be inquired consisting of the first character and the third character arranged in sequence;
receiving an enquiry response sent from the server, the enquiry response generated by inquiring a word-stock in the server by the server;
recording a correlation relationship between the first character and the third character in the target word-stock, if the enquiry response indicates that the item to be inquired exists in the word-stock in the server.

Alternatively, updating the target word-stock according to the first character and the third character, includes:
displaying update promoting information to the user;
receiving an update instruction triggered by the user according to the update promoting information, the update instruction including an item to be inquired consisting of the first character and the third character arranged in sequence;
recording a correlation relationship between the first character and the third character in the target word-stock.

According to a fourth aspect of embodiments of the present disclosure, there is provided a device for inputting character, including:
a first receiving module configured to receive a first character input by a user;
a determining module configured to determine a second character set correlated with the first character, the second character set including at least one second character;
an inquiring module configured to inquiry a corresponding relationship between a character and a key identifier to obtain a target key identifier corresponding to each second character;
a controlling module configured to control a key light corresponding to a target key indicated by the target key identifier to emit a light with a preset color, the light with the preset color for prompting the user to input character.

Alternatively, the determining module is configured to:
determine a target word-stock, the target word-stock being a word-stock corresponding to an input method currently used by the user or a word-stock established by words input by the user, and the target word-stock for recording a correlation relationship between different characters;
obtain the second character set by inquiring the target word-stock according to the first character.

Alternatively, the device further includes:
a second receiving module configured to receive a third character input by the user;
a judging module configured to judge whether a character identical to the third character exists in the second character set;
an updating module configured to update the target word-stock according to the first character and the third character, if the character identical to the third character does not exist in the second character set.

Alternatively, the updating module is configured to:
send an enquiry request to a server, the enquiry request including an item to be inquired consisting of the first character and the third character arranged in sequence;
receive an enquiry response sent from the server, the enquiry response generated by inquiring a word-stock in the server by the server;
record a correlation relationship between the first character and the third character in the target word-stock, if the enquiry response indicates that the item to be inquired exists in the word-stock in the server.

Alternatively, the updating module is configured to:
display update promoting information to the user;
receive an update instruction triggered by the user according to the update promoting information, the update instruction including an item to be inquired consisting of the first character and the third character arranged in sequence;
record a correlation relationship between the first character and the third character in the target word-stock.

Alternatively, the controlling module is configured to:
control the key light corresponding to the target key indicated by the target key identifier on and to emit the light with the preset color;
control key lights corresponding to keys on a keyboard other than the target key off.

Alternatively, keys on a keyboard include function keys, and the controlling module is configured to:
control the key light corresponding to the target key indicated by the target key identifier to emit a light with a first preset color;
control key lights corresponding to the function keys to emit a light with a second preset color;
control key lights corresponding to keys on a keyboard other than the target key and the function keys to emit a light with a third preset color;
in which the first preset color, the second preset color and the third preset color are different from each other.

Alternatively, keys on a keyboard include function keys, and the controlling module is configured to:
control the key light corresponding to the target key indicated by the target key identifier to emit a light with a first preset color;
control key lights corresponding to the function keys to emit a light with a second preset color;
control key lights corresponding to keys on a keyboard other than the target key and the function keys off;
in which the first preset color is different from the second preset color.

Alternatively, the controlling module is configured to:
control the key light corresponding to the target key indicated by the target key identifier to emit the light with the preset color and to flash.

Alternatively, the second character set includes at least two second characters, the controlling module is configured to:
determine a correlation degree between each second character and the first character respectively to obtain at least two correlation degrees;
control a key light corresponding to a target key indicated by a target key identifier corresponding to each second character to emit the light with the preset color;
in which a strength of a light emitted by a key light corresponding to any one target key is positively correlated with the correlation degree between a second character corresponding to the any one target key and the first character.

Alternatively, the second character set includes at least two second characters, the at least two second characters are arranged in sequence,
the controlling module is configured to:
control a key light corresponding to a target key indicated by a target key identifier corresponding to each second character to emit the light with the preset color in sequence according to an arrange sequence of the at least two second characters.

According to a fifth aspect of embodiments of the present disclosure, there is provided a device for inputting character, including:
a receiving module configured to receive a key light on instruction, the key light on instruction including a second character in a second character set correlated with a first character and determined according to the first character input by a user, and the second character set including at least one second character;
an inquiring module configured to inquiry a corresponding relationship between a character and a key identifier according to the key light on instruction to obtain a target key identifier corresponding to each second character;
a controlling module configured to control a key light corresponding to a target key indicated by the target key identifier to emit a light with a preset color, the light with the preset color for prompting the user to input character.

Alternatively, the controlling module is configured to:
control the key light corresponding to the target key indicated by the target key identifier on and to emit the light with the preset color;
control key lights corresponding to keys on a keyboard other than the target key off.

Alternatively, keys on a keyboard include function keys, and the controlling module is configured to:
control the key light corresponding to the target key indicated by the target key identifier to emit a light with a first preset color;
control key lights corresponding to the function keys to emit a light with a second preset color;
control key lights corresponding to keys on a keyboard other than the target key and the function keys to emit a light with a third preset color;
in which the first preset color, the second preset color and the third preset color are different from each other.

Alternatively, keys on a keyboard include function keys, and the controlling module is configured to:
control the key light corresponding to the target key indicated by the target key identifier to emit a light with a first preset color;
control key lights corresponding to the function keys to emit a light with a second preset color;
control key lights corresponding to keys on a keyboard other than the target key and the function keys off;
in which the first preset color is different from the second preset color.

Alternatively, the controlling module is configured to:
control the key light corresponding to the target key indicated by the target key identifier to emit the light with the preset color and to flash.

Alternatively, the second character set includes at least two second characters, the controlling module is configured to:
determine a correlation degree between each second character and the first character respectively to obtain at least two correlation degrees;
control a key light corresponding to a target key indicated by a target key identifier corresponding to each second character to emit the light with the preset color;
in which a strength of a light emitted by a key light corresponding to any one target key is positively correlated with the correlation degree between a second character corresponding to the any one target key and the first character.

Alternatively, the second character set includes at least two second characters, the at least two second characters are arranged in sequence,
the controlling module is configured to:
control a key light corresponding to a target key indicated by a target key identifier corresponding to each second character to emit the light with the preset color in sequence according to an arrange sequence of the at least two second characters.

According to a sixth aspect of embodiments of the present disclosure, there is provided a device for inputting character, including:
a first receiving module configured to receive a first character input by a user;
a determining module configured to determine a second character set correlated with the first character, the second character set including at least one second character;
a sending module configured to send a key light on instruction, the key light on instruction including a second character in the second character set, such that a keyboard inquiries a corresponding relationship between a character and a key identifier to obtain a target key identifier corresponding to each second character according to the key light on instruction, and controls a key light corresponding to a target key indicated by the target key identifier to emit a light with a preset color, the light with the preset color for prompting the user to input character.

Alternatively, the determining module is configured to:
determine a target word-stock, the target word-stock being a word-stock corresponding to an input method currently used by the user or a word-stock established by words input by the user, and the target word-stock for recording a correlation relationship between different characters;
obtain the second character set by inquiring the target word-stock according to the first character.

Alternatively, the device further includes:
a second receiving module configured to receive a third character input by the user;
a judging module configured to judge whether a character identical to the third character exists in the second character set;
an updating module configured to update the target word-stock according to the first character and the third character, if the character identical to the third character does not exist in the second character set.

Alternatively, the updating module is configured to:
send an enquiry request to a server, the enquiry request including an item to be inquired consisting of the first character and the third character arranged in sequence;
receive an enquiry response sent from the server, the enquiry response generated by inquiring a word-stock in the server by the server;
record a correlation relationship between the first character and the third character in the target word-stock, if the enquiry response indicates that the item to be inquired exists in the word-stock in the server.

Alternatively, the updating module is configured to:
display update promoting information to the user;
receive an update instruction triggered by the user according to the update promoting information, the update instruction including an item to be inquired consisting of the first character and the third character arranged in sequence;
record a correlation relationship between the first character and the third character in the target word-stock.

According to a seventh aspect of embodiments of the present disclosure, there is provided a device for inputting character, including:
a processor;
a memory configured to store an instruction executable by the processor;
in which the processor is configured to:
   receive a first character input by a user;
   determine a second character set correlated with the first character, the second character set including at least one second character;
   inquiry a corresponding relationship between a character and a key identifier to obtain a target key identifier corresponding to each second character;
   control a key light corresponding to a target key indicated by the target key identifier to emit a light with a preset color, the light with the preset color for prompting the user to input character.

According to an eighth aspect of embodiments of the present disclosure, there is provided a device for inputting character, including:
a processor;
a memory configured to store an instruction executable by the processor;
in which the processor is configured to:
   receive a key light on instruction, the key light on instruction including a second character in a second character set correlated with a first character and determined according to the first character input by a user, and the second character set including at least one second character;
   inquiry a corresponding relationship between a character and a key identifier according to the key light on instruction to obtain a target key identifier corresponding to each second character;
   control a key light corresponding to a target key indicated by the target key identifier to emit a light with a preset color, the light with the preset color for prompting the user to input character.

According to a ninth aspect of embodiments of the present disclosure, there is provided a device for inputting character, including:
a processor;
a memory configured to store an instruction executable by the processor;
in which the processor is configured to:
   receive a first character input by a user;
   determine a second character set correlated with the first character, the second character set including at least one second character;
   send a key light on instruction, the key light on instruction including a second character in the second character set, such that a keyboard inquiries a corresponding relationship between a character and a key identifier to obtain a target key identifier corresponding to each second character according to the key light on instruction, and controls a key light corresponding to a target key indicated by the target key identifier to emit a light with a preset color, the light with the preset color for prompting the user to input character.

According to a tenth aspect of embodiments of the present disclosure, there is provided a system for inputting character, including a keyboard and a processor in a terminal,
the keyboard including a device for inputting character described in the fifth aspect of embodiments of the present disclosure;
the processor in the terminal including a device for inputting character described in the sixth aspect of embodiments of the present disclosure.

According to an eleventh aspect of embodiments of the present disclosure, there is provided a system for inputting character, including a keyboard and a processor in a terminal,
the keyboard including a device for inputting character described in the eighth aspect of embodiments of the present disclosure;
the processor in the terminal including a device for inputting character described in the ninth aspect of embodiments of the present disclosure.

According to a twelfth aspect of embodiments of the present disclosure, there is provided a program product having stored therein instructions that, when executed by one or more processors of a terminal device, causes the terminal device to perform a method for inputting character, the method including:
receiving a first character input by a user;
determining a second character set correlated with the first character, the second character set comprising at least one second character;
inquiring a corresponding relationship between a character and a key identifier to obtain a target key identifier corresponding to each second character;
controlling a key light corresponding to a target key indicated by the target key identifier to emit a light with a preset color, the light with the preset color for prompting the user to input character;
or the method including:
   receiving a key light on instruction, the key light on instruction comprising a second character in a second character set correlated with a first character and determined according to the first character input by a user, and the second character set comprising at least one second character;
   inquiring a corresponding relationship between a character and a key identifier according to the key light on instruction to obtain a target key identifier corresponding to each second character;
   controlling a key light corresponding to a target key indicated by the target key identifier to emit a light with a preset color, the light with the preset color for prompting the user to input character;
   or the method including:
      receiving a first character input by a user;
      determining a second character set correlated with the first character, the second character set comprising at least one second character;
      sending a key light on instruction, the key light on instruction comprising a second character in the second character set, such that a keyboard inquiries a corresponding relationship between a character and a key identifier to obtain a target key identifier corresponding to each second character according to the key light on instruction, and controls a key light corresponding to a target key indicated by the target key identifier to emit a light with a preset color, the light with the preset color for prompting the user to input character.

The technical solution provided in the present disclosure may include following advantages:

In the method, the device and the system for inputting character provided in the present disclosure, the first character input by the user is received; the second character set correlated with the first character is determined, the second character set including at least one second character; by inquiring the corresponding relationship between a character and a key identifier, the target key identifier corresponding to each second character is obtained; and the key light corresponding to the target key indicated by the target key identifier is controlled to emit the light with the preset color, the light with the preset color for prompting the user to input character. With the embodiments of the present disclosure, by controlling the key light corresponding to the target key indicated by the target key identifier to emit the light with the preset color so as to prompt the user to input character, the problems of low inputting efficiency and input error in the related art are solved, and thus effects of improving the inputting efficiency and avoiding the input error are achieved.

It is to be understood that both the foregoing general description and the following detailed description are exemplary and explanatory only and are not restrictive of the invention, as claimed.

### BRIEF DESCRIPTION OF THE DRAWINGS

In order to specifically illustrate embodiments of the present disclosure, the accompanying drawings, which are required by the description of the embodiments, will be introduced briefly in the following. Apparently, the drawings in the following description only relates to some embodiments of the present disclosure, and for the ordinary person skilled in the art, other drawings may be obtained according to these drawings, without creative labour.

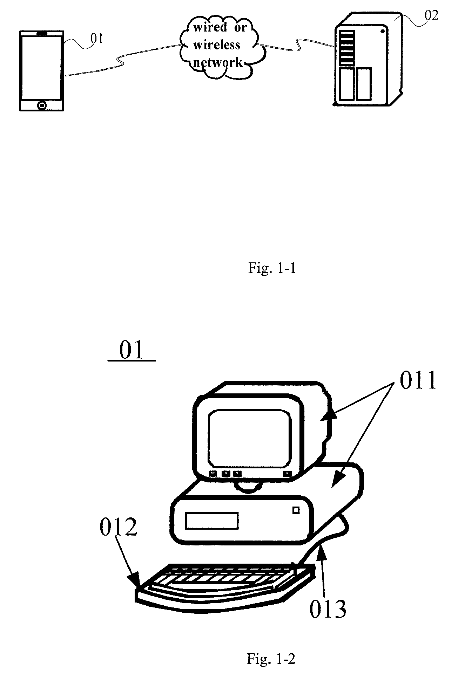

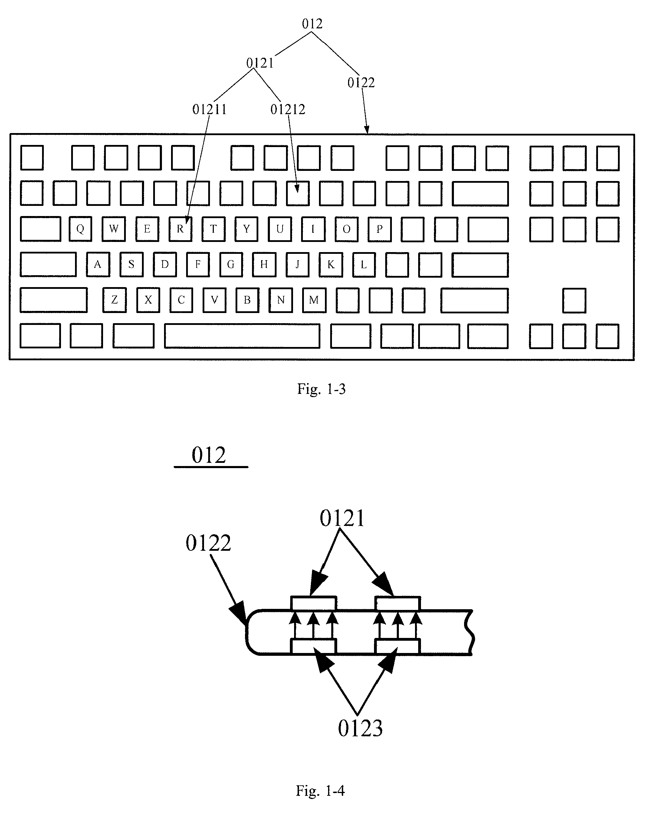

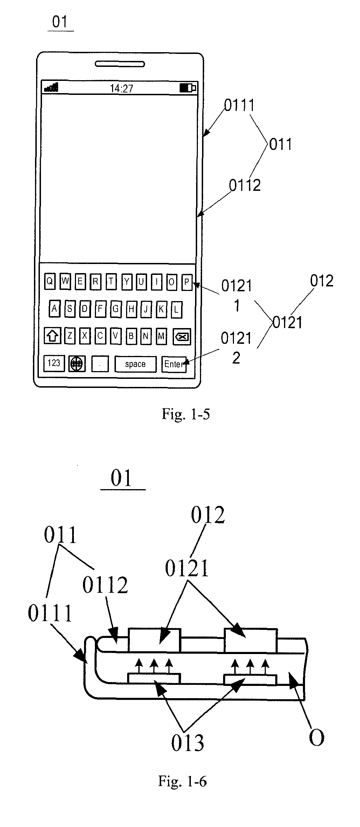

Fig. 1-1 is a schematic diagram illustrating an implementation environment involved in a method for inputting character provided by an embodiment of the present disclosure;
Fig. 1-2 is a schematic structural diagram of a terminal in the implementation environment shown in Fig. 1-1;
Fig. 1-3 is a front view of a keyboard shown in Fig. 1-2;
Fig. 1-4 is a cross-sectional view of the keyboard shown in Fig. 1-3;
Fig. 1-5 is a schematic structural diagram of another terminal in the implementation environment shown in Fig. 1-1;
Fig. 1-6 is a cross-sectional view of the terminal shown in Fig. 1-5;
Fig. 2 is a flow chart of a method for inputting character, according to an exemplary embodiment;
Fig. 3 is a flow chart of a method for inputting character, according to another exemplary embodiment;
Fig. 4 is a flow chart of a method for inputting character, according to yet another exemplary embodiment;
Fig. 5-1 is a flow chart of a method for inputting character, according to yet another exemplary embodiment;
Fig. 5-2 is a flow chart of a method for determining a second character setcorrelated with a first character by a terminal according to the embodiment shown in Fig. 5-1;
Fig. 5-3 is a flow chart of a method for controlling a key light corresponding to a target key indicated by a target key identifier to turn on and to emit a light with a preset color by the terminal according to the embodiment shown in Fig. 5-1;
Fig. 5-4 is a schematic diagram illustrating controlling a key light corresponding to a target key indicated by a target key identifier to turn on and to emit a light with a preset color by the terminal according to the embodiment shown in Fig. 5-3;
Fig. 5-5 is a flow chart of a method for controlling a key light corresponding to a target key indicated by a target key identifier to emit a light with a preset color by another terminal according to the embodiment shown in Fig. 5-1;

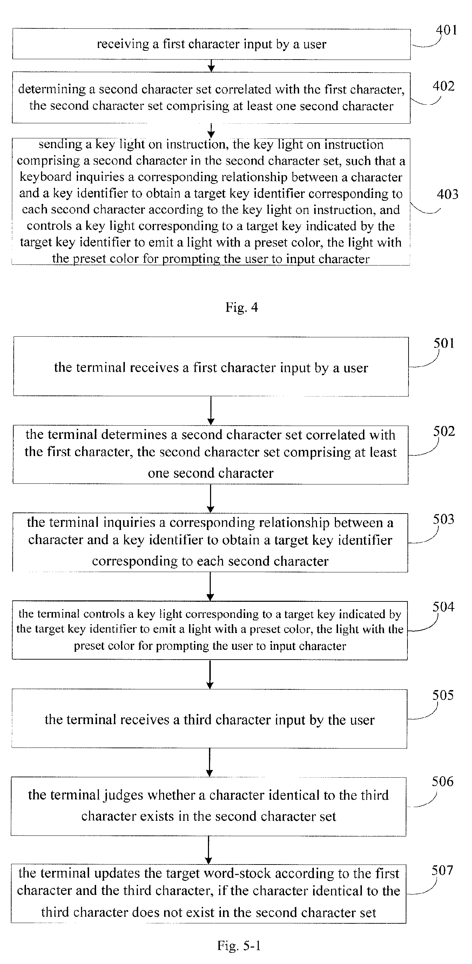

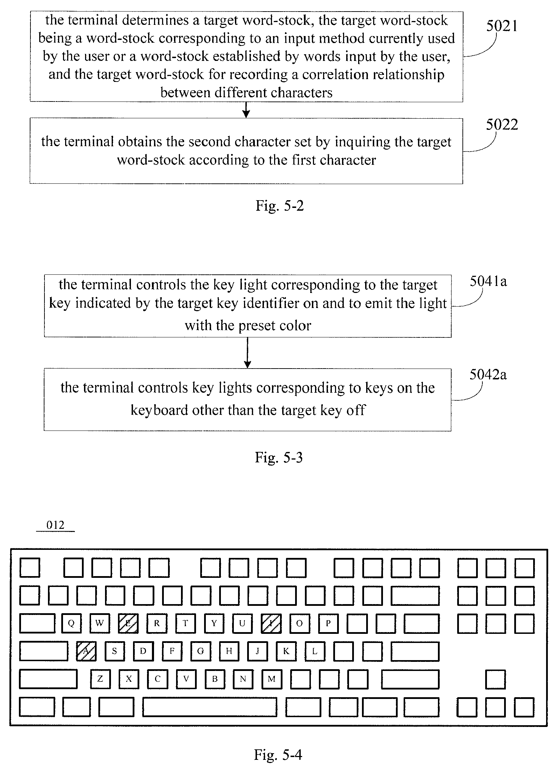

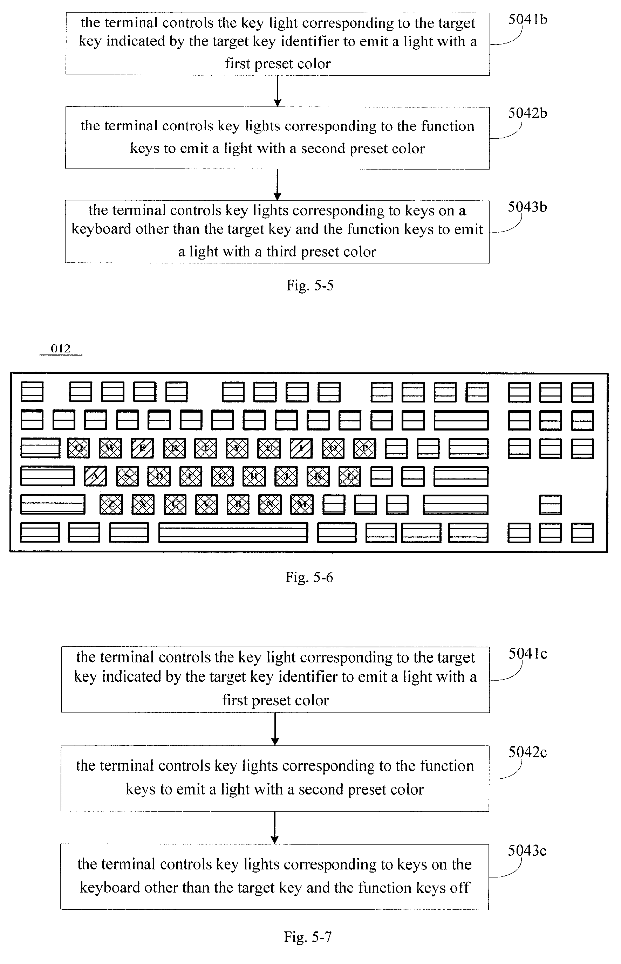

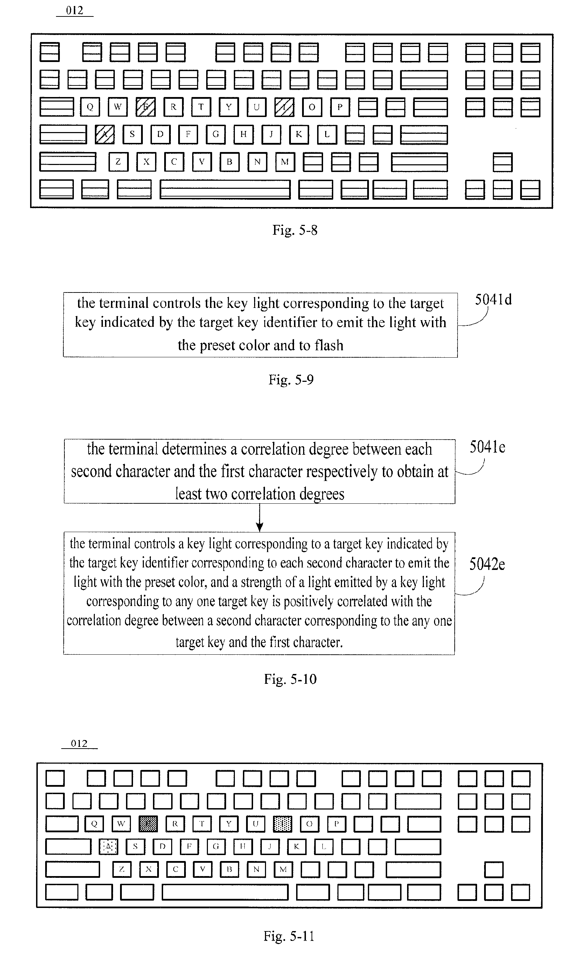

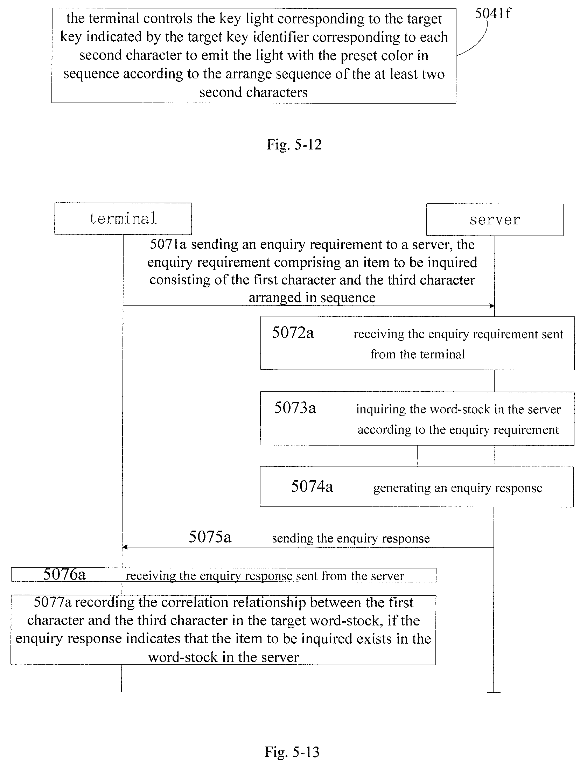

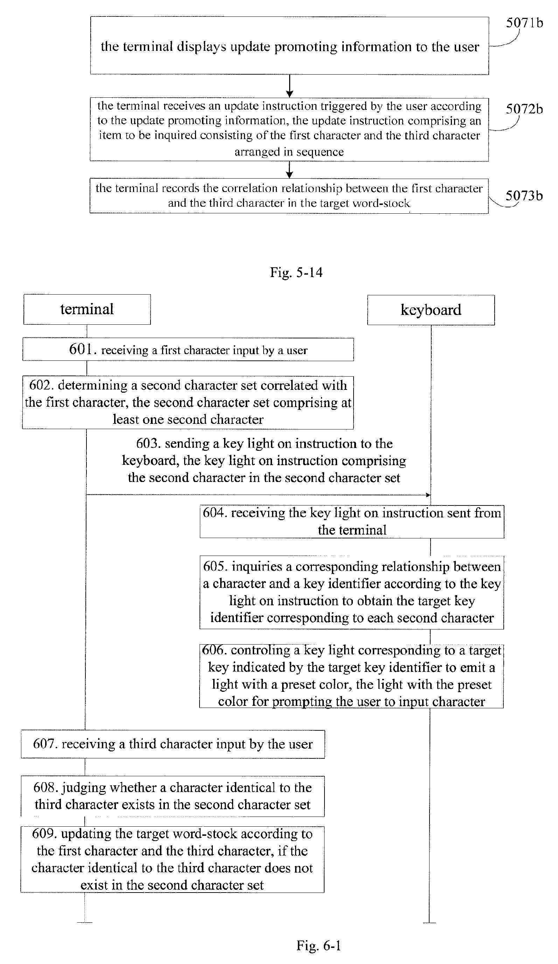

Fig. 5-6 is a schematic diagram illustrating controlling a key light corresponding to a target key indicated by a target key identifier to emit a light with a preset color by the terminal according to the embodiment shown in Fig. 5-5;
Fig. 5-7 is a flow chart of a method for controlling a key light corresponding to a target key indicated by a target key identifier to emit a light with a preset color by yet another terminal according to the embodiment shown in Fig. 5-1;
Fig. 5-8 is a schematic diagram illustrating controlling a key light corresponding to a target key indicated by a target key identifier to emit a light with a preset color by the terminal according to the embodiment shown in Fig. 5-7;
Fig. 5-9 is a flow chart of a method for controlling a key light corresponding to a target key indicated by a target key identifier to emit a light with a preset color by yet another terminal according to the embodiment shown in Fig. 5-1;
Fig. 5-10 is a flow chart of a method for controlling a key light corresponding to a target key indicated by a target key identifier to emit a light with a preset color by yet another terminal according to the embodiment shown in Fig. 5-1;
Fig. 5-11 is a schematic diagram illustrating controlling a key light corresponding to a target key indicated by a target key identifier to emit a light with a preset color by the terminal according to the embodiment shown in Fig. 5-10;
Fig. 5-12 is a flow chart of a method for controlling a key light corresponding to a target key indicated by a target key identifier to emit a light with a preset color by yet another terminal according to the embodiment shown in Fig. 5-1;
Fig. 5-13 is a flow chart of a method for updating a target word-stock according to a first character and a third character by the terminal according to the embodiment shown in Fig. 5-1;
Fig. 5-14 is a flow chart of a method for updating a target word-stock according to a first character and a third character by another terminal according to the embodiment shown in Fig. 5-1;

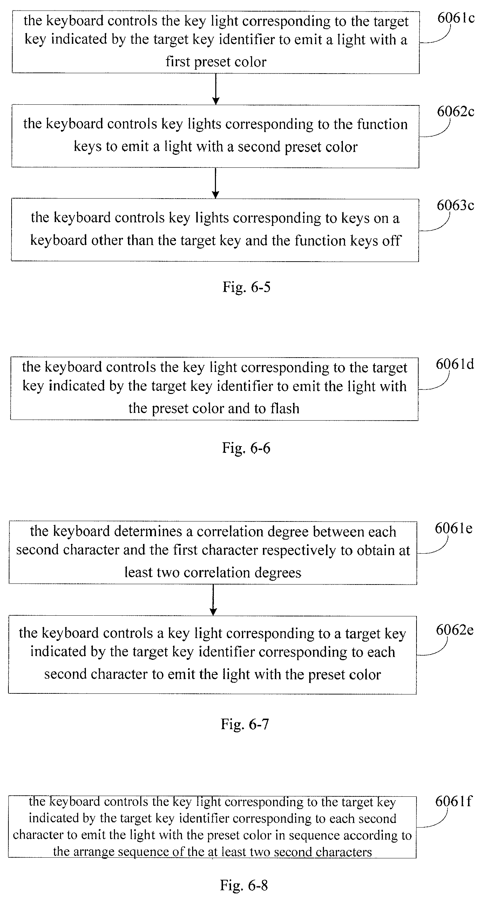

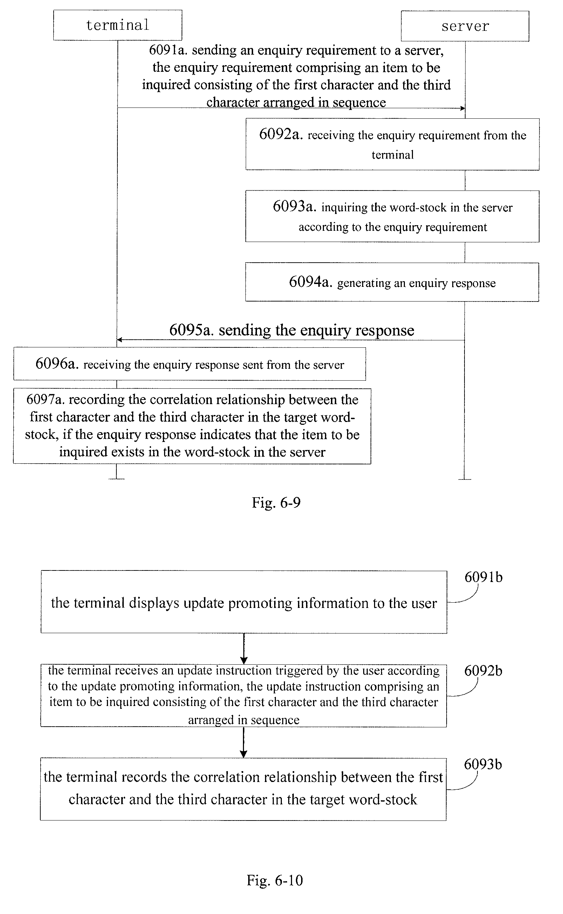

Fig. 6-1 is a flow chart of a method for inputting character, according to yet another exemplary embodiment;

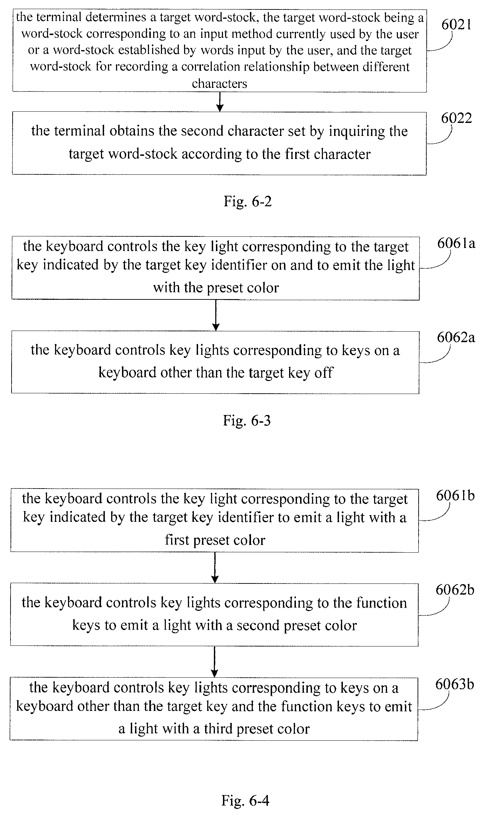

Fig. 6-2 is a flow chart of a method for determining a second character set correlated with a first character by a terminal according to the embodiment shown in Fig. 6-1;
Fig. 6-3 is a flow chart of a method for controlling a key light corresponding to a target key indicated by a target key identifier to turn on and to emit a light with a preset color by a keyboard according to the embodiment shown in Fig. 6-1;
Fig. 6-4 is a flow chart of a method for controlling a key light corresponding to a target key indicated by a target key identifier to turn on and to emit a light with a preset color by another keyboard according to the embodiment shown in Fig. 6-1;
Fig. 6-5 is a flow chart of a method for controlling a key light corresponding to a target key indicated by a target key identifier to turn on and to emit a light with a preset color by yet another keyboard according to the embodiment shown in Fig. 6-1;
Fig. 6-6 is a flow chart of a method for controlling a key light corresponding to a target key indicated by a target key identifier to turn on and to emit a light with a preset color by yet another keyboard according to the embodiment shown in Fig. 6-1;
Fig. 6-7 is a flow chart of a method for controlling a key light corresponding to a target key indicated by a target key identifier to turn on and to emit a light with a preset color by yet another keyboard according to the embodiment shown in Fig. 6-1;
Fig. 6-8 is a flow chart of a method for controlling a key light corresponding to a target key indicated by a target key identifier to turn on and to emit a light with a preset color by yet another keyboard according to the embodiment shown in Fig. 6-1;
Fig. 6-9 is a flow chart of a method for updating a target word-stock according to a first character and a third character by a terminal according to the embodiment shown in Fig. 6-1;
Fig. 6-10 is a flow chart of a method for updating a target word-stock according to a first character and a third character by another terminal according to the embodiment shown in Fig. 6-1;

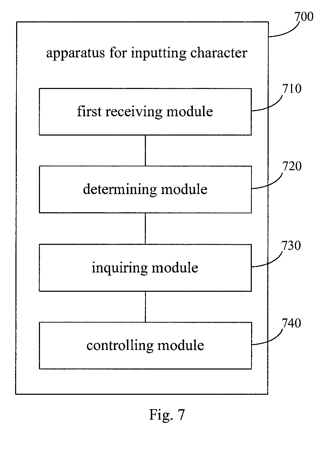

Fig. 7 is a block diagram of a device for inputting character, according to an exemplary embodiment;

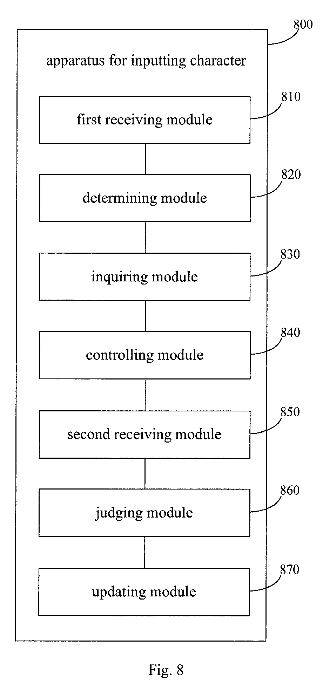

Fig. 8 is a block diagram of a device for inputting character, according to another exemplary embodiment;

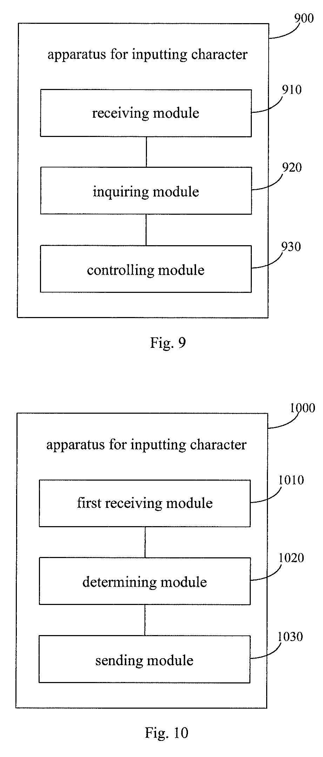

Fig. 9 is a block diagram of a device for inputting character, according to yet another exemplary embodiment;
Fig. 10 is a block diagram of a device for inputting character, according to yet another exemplary embodiment;

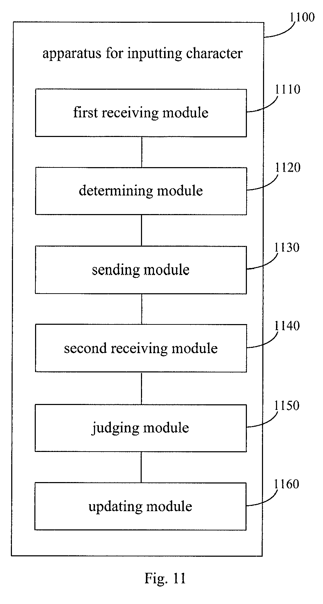

Fig. 11 is a block diagram of a device for inputting character, according to yet another exemplary embodiment;

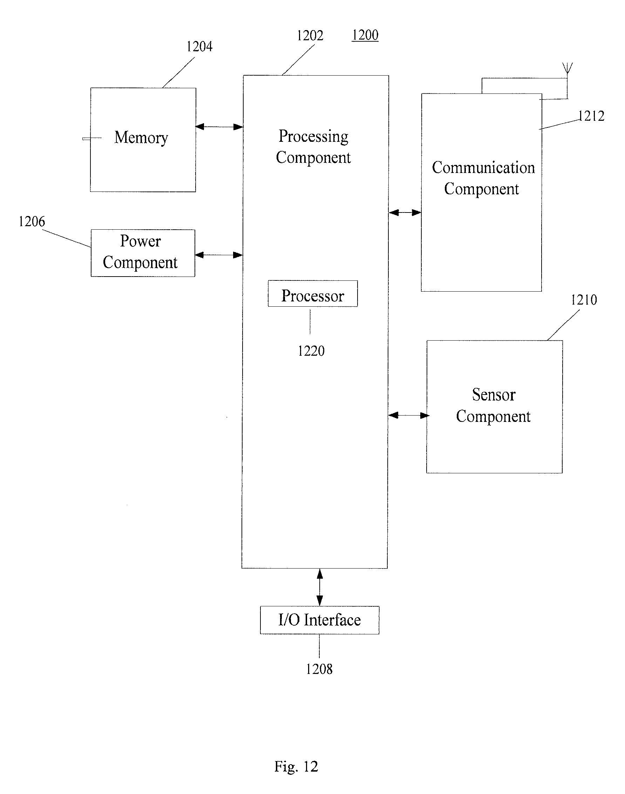

Fig. 12 is a block diagram of a device for inputting character, according to an exemplary embodiment;

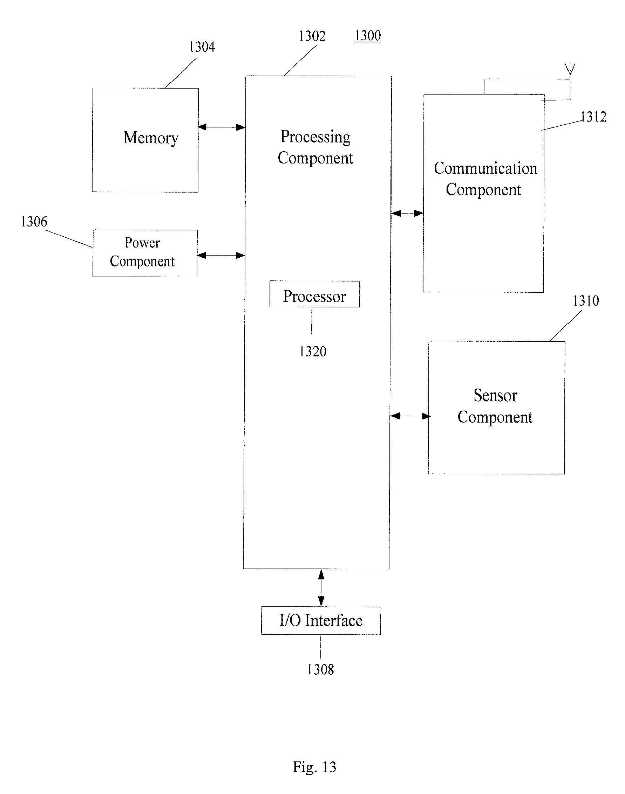

Fig. 13 is a block diagram of a device for inputting character, according to another exemplary embodiment;

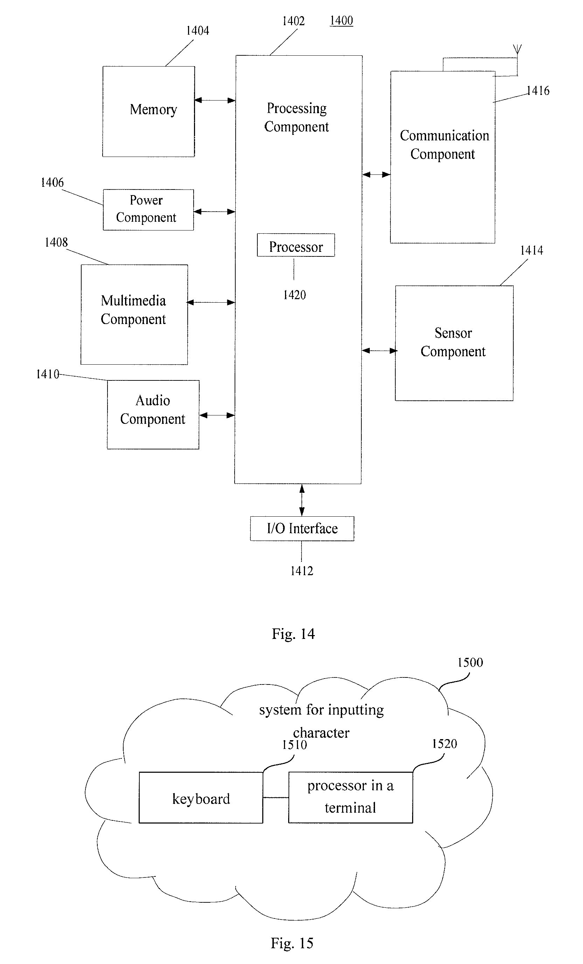

Fig. 14 is a block diagram of a device for inputting character, according to yet another exemplary embodiment;
Fig. 15 is a block diagram of a system for inputting character, according to an exemplary embodiment.

The accompanying drawings, which are incorporated in and constitute a part of this specification, illustrate embodiments consistent with the present disclosure and, together with the description, serve to explain the principles of the present disclosure.

### DETAILED DESCRIPTION

In order to make the objects, technical solutions and advantages of the present disclosure more clear, the present disclosure will be further described in detail with reference to the accompanying drawings. Apparently, the embodiments described are merely a part of embodiments of the present disclosure, other than all embodiments. Based on the embodiments in the present disclosure, all other embodiments obtained by the ordinary person skilled in the art without creative labour fall into the protection scale of the present disclosure.

Fig. 1-1 is a schematic diagram illustrating an implementation environment involved in respective embodiments of the present disclosure. Referring to Fig. 1-1, the implementation environment includes a terminal 01 and a server 02, which are connected via a wired or wireless network. The wireless network may include but is not limited to a wireless local area network (WLAN), such as WIFI, a Blue Tooth, an Infrared, a Zigbee, data, etc., which is not limited by the embodiments of the present disclosure.

In an embodiment of the present disclosure, the terminal 01 is a terminal provided with a keyboard, and a user may input characters to the terminal 01 via the keyboard. For example, the terminal may be a mobile phone, a desktop computer, a portable laptop computer, a notebook computer, a smart television, a smart wearable device provided with a keyboard and the like. The server 02 may be one server or a server group consisting of several servers, or a cloud-computing service center, which is not limited by the embodiments of the present disclosure.

The terminal 01 may be a storage word-stock, and the server 02 also may be a storage word-stock. The word-stock is for recording a correlation relationship between different characters, and the word-stock stored in the server 02 is more abundant than that stored in the terminal 01. When a correlation relationship between characters of preset words is not recorded in the word-stock stored in the terminal 01, the terminal 01 may interact with the server 02 to update the word-stock stored in the terminal 01.

In the embodiment of the present disclosure, the keyboard is generally provided with a keyboard light. A light emitted by the keyboard light generally has an adjustable color. When the user inputs characters via the keyboard, the terminal 01 may control the keyboard light on. When the keyboard light is on, the light emitted by the keyboard light illuminates the keyboard, such that if the user is currently in an environment with weak light, the light emitted by the keyboard light may provide convenience for the user for inputting. The terminal 01 may adjust the color of the light emitted by the keyboard light to a preset color according to a brightness of the light of the environment of the user, so as to enable the color of the light illuminating the keyboard fit for inputting of the user in the current environment.

Illustratively, as shown in Fig. 1-2, it illustrates a schematic structural diagram of the terminal 01 in the implementation environment shown in Fig. 1-1. The terminal 01 being a computer is taken as an example in Fig. 1-2. Referring to Fig. 1-2, the terminal 01 includes a terminal body 011 and a keyboard 012 connected to the terminal body 011. The keyboard 012 is connected with the terminal body 011 via a signal line 013, and an interface between the keyboard 012 and the terminal body 011 may be a universal serial bus (USB for short) interface.

Refer to Fig. 1-3, which shows a front view of a keyboard 012 shown in Fig. 1-2. With reference to Fig. 1-3, the keyboard 012 may include at least one key 0121, and each key 0121 may corresponds to one key light (not shown in Fig. 1-3). When being turned on, any one key light can illuminate the key 0121 corresponding to the any one key light. Illustratively, the keyboard 012 may include a housing 0122, and the at least one key 0121 provided on the housing 0122. Referring to Fig. 1-3, the at least one key 0121 may include character keys 01211 and function keys 01212. The character keys 01211 may be keys provided with letters or etymons, while the function keys 01212 are keys other than the character keys 01211 of the keys in the keyboard 012. For example, the function keys 01212 may include keys provided with numbers, punctuation marks and space bars, which is not limited by the embodiments of the present disclosure.

Alternatively, with reference to Fig. 1-4, it shows a cross-sectional view of the keyboard 012 shown in Fig. 1-3. Referring to Fig. 1-4, the keyboard 012 may include the housing 0122 and the at least one key 0121 provided on the housing 0122 (two keys are shown in Fig. 1-4), and each key 0121 may corresponds to one key light 0123. When being turned on, any one key light 0123 can illuminate the key 0121 corresponding to the any one key light 0123. The any one key light 0123 is provided inside the housing 0122 and is located under the key 0121 corresponding to the any one key light 0123.

Illustratively, as shown in Fig. 1-5, it illustrates a schematic structural diagram of another terminal 01 in the implementation environment shown in Fig. 1-1. The terminal 01 being a mobile phone is taken as an example in Fig. 1-5. Referring to Fig. 1-5, the terminal 01 may include a terminal body 011 and a keyboard 012 connected to the terminal body 011. Illustratively, the terminal body 011 may include a housing 0111 and a front board 0112 provided on the housing 0111, and the keyboard 012 is provided on the front board 0112.

The keyboard 012 may include at least one key 0121, and each key 0121 may corresponds to one key light (not shown in Fig. 1-5). When being turned on, any one key light can illuminate the key 0121 corresponding to the any one key light. With reference to Fig. 1-5, the at least one key 0121 may include character keys 01211 and function keys 01212. The character keys 01211 may be keys provided with letters or etymons, while the function keys 01212 are keys other than the character keys 01211 of the keys in the keyboard 012. For example, the function keys 01212 may include keys provided with numbers, punctuation marks and space bars, which is not limited by the embodiments of the present disclosure. Alternatively, in the embodiments of the present disclosure, the keyboard 012 also may be a keyboard module of software, which is displayed in a display screen of the terminal, and a display interface of the keyboard 012 may be shown in Fig. 1-5.

Alternatively, with reference to Fig. 1-6, it shows a cross-sectional view of the terminal 01 shown in Fig. 1-5. Referring to Fig. 1-6, the terminal body 011 may include the housing 0111 and the front board 0112 provided on the housing 0111, the keyboard 012 is provided on the front board 0112, any one key light 013 is provided inside the housing 0111 and is located between the housing 0111 and the key 0121 corresponding to the any one key light 013.

It should be illustrated that, as shown in Fig. 1-6, there is a cavity O formed between the housing 0111 and the front board 0112, and the cavity O is configured to hold a chip or other hardware structures of the terminal 01, which is not limited by the embodiments of the present disclosure.

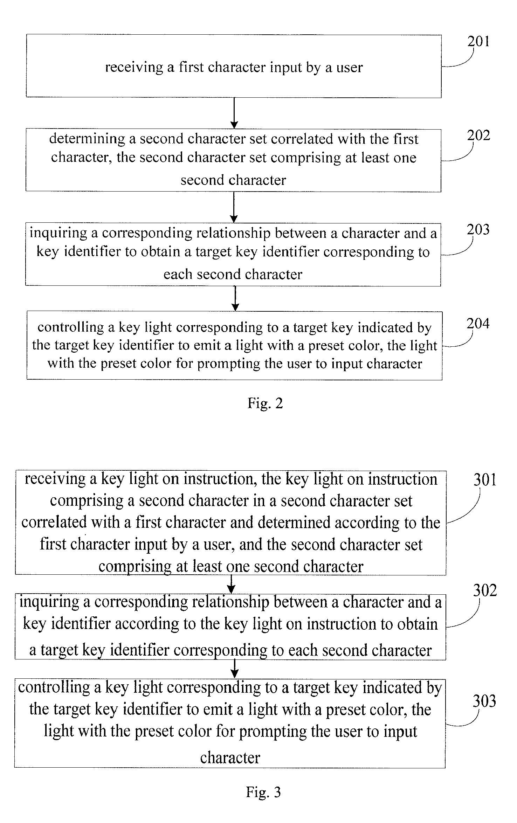

Fig. 2 is a flow chart of a method for inputting character, according to an exemplary embodiment. This embodiment will be described taking an example of applying this method for inputting character in the terminal 01 of the implementation environment shown in Fig. 1-1. With reference to Fig. 2, the method for inputting character may include following steps.

In step 201, a first character input by a user is received.

In step 202, a second character set correlated with the first character is determined, the second character set including at least one second character.

In step 203, a corresponding relationship between a character and a key identifier is inquired to obtain a target key identifier corresponding to each second character.

In step 204, a key light corresponding to a target key indicated by the target key identifier is controlled to emit a light with a preset color, the light with the preset color for prompting the user to input character.

In conclusion, in the method for inputting character provided in the embodiments of the present disclosure, the first character input by the user is received; the second character set correlated with the first character is determined, the second character set including at least one second character; by inquiring the corresponding relationship between a character and a key identifier, the target key identifier corresponding to each second character is obtained; and the key light corresponding to the target key indicated by the target key identifier is controlled to emit the light with the preset color, the light with the preset color for prompting the user to input character. With the embodiments of the present disclosure, by controlling the key light corresponding to the target key indicated by the target key identifier to emit the light with the preset color so as to prompt the user to input character, the problems of low inputting efficiency and input error in the related art are solved, and thus effects of improving the inputting efficiency and avoiding the input error are achieved.

Alternatively, the step 202 may include:
determining a target word-stock, the target word-stock being a word-stock corresponding to an input method currently used by the user or a word-stock established by words input by the user, and the target word-stock for recording a correlation relationship between different characters;
obtaining the second character set by inquiring the target word-stock according to the first character.

Word-stock is a stock or list of words, or a dictionary.

Alternatively, after the step 204, the method further includes:
receiving a third character input by the user;
judging whether a character identical to the third character exists in the second character set;
updating the target word-stock or list of words according to the first character and the third character, if the character identical to the third character does not exist in the second character set.

Alternatively, updating the target word-stock or list of words according to the first character and the third character, includes:
sending an enquiry request to a server, the enquiry request including an item to be inquired consisting of the first character and the third character arranged in sequence;
receiving an enquiry response sent from the server, the enquiry response generated by inquiring a word-stock in the server by the server;
recording a correlation relationship between the first character and the third character in the target word-stock, if the enquiry response indicates that the item to be inquired exists in the word-stock in the server.

Alternatively, updating the target word-stock according to the first character and the third character, includes:
displaying update promoting information to the user;
receiving an update instruction triggered by the user according to the update promoting information, the update instruction including an item to be inquired consisting of the first character and the third character arranged in sequence;
recording a correlation relationship between the first character and the third character in the target word-stock.

Alternatively, the step 204 may include:
controlling the key light corresponding to the target key indicated by the target key identifier on and to emit the light with the preset color;
controlling key lights corresponding to keys on a keyboard other than the target key off.

Alternatively, keys on a keyboard include function keys, and the step 204 may include:
controlling the key light corresponding to the target key indicated by the target key identifier to emit a light with a first preset color;
controlling key lights corresponding to the function keys to emit a light with a second preset color;
controlling key lights corresponding to keys on a keyboard other than the target key and the function keys to emit a light with a third preset color;
in which the first preset color, the second preset color and the third preset color are different from each other.

Alternatively, keys on a keyboard include function keys, and the step 204 may include:
controlling the key light corresponding to the target key indicated by the target key identifier to emit a light with a first preset color;
controlling key lights corresponding to the function keys to emit a light with a second preset color;
controlling key lights corresponding to keys on a keyboard other than the target key and the function keys off;
in which the first preset color is different from the second preset color.

Alternatively, the step 204 may include:
controlling the key light corresponding to the target key indicated by the target key identifier to emit the light with the preset color and to flash.

Alternatively, the second character set includes at least two second characters, and the step 204 may include:
determining a correlation degree between each second character and the first character respectively to obtain at least two correlation degrees;
controlling a key light corresponding to a target key indicated by the target key identifier corresponding to each second character to emit the light with the preset color;
in which a strength of a light emitted by a key light corresponding to any one target key is positively correlated with the correlation degree between a second character corresponding to the any one target key and the first character.

Alternatively, the second character set includes at least two second characters, the at least two second characters are arranged in sequence, and the step 204 may include:
controlling a key light corresponding to a target key indicated by a target key identifier corresponding to each second character to emit the light with the preset color in sequence according to an arrange sequence of the at least two second characters.

All of the alternative technical solutions above may be combined in any form to form alternative embodiments of the present disclosure, which will not be elaborated herein.

In conclusion, in the method for inputting character provided in the present disclosure, the first character input by the user is received; the second character set correlated with the first character is determined, the second character set including at least one second character; by inquiring the corresponding relationship between a character and a key identifier, the target key identifier corresponding to each second character is obtained; and the key light corresponding to the target key indicated by the target key identifier is controlled to emit the light with the preset color, the light with the preset color for prompting the user to input character. With the embodiments of the present disclosure, by controlling the key light corresponding to the target key indicated by the target key identifier to emit the light with the preset color so as to prompt the user to input character, the problems of low inputting efficiency and input error in the related art are solved, and thus effects of improving the inputting efficiency and avoiding the input error are achieved.

Fig. 3 is a flow chart of a method for inputting character, according to another exemplary embodiment. This embodiment will be described taking an example of applying this method for inputting character in the terminal 01 of the implementation environment shown in Fig. 1-1. With reference to Fig. 3, the method for inputting character may include following steps.

In step 301, a key light on instruction is received, the key light on instruction including a second character in a second character set correlated with a first character and determined according to the first character input by a user, and the second character set including at least one second character.

In step 302, a corresponding relationship between a character and a key identifier is inquired according to the key light on instruction to obtain a target key identifier corresponding to each second character.

In step 303, a key light corresponding to a target key indicated by the target key identifier is controlled to emit a light with a preset color, the light with the preset color for prompting the user to input character.

In conclusion, in the method for inputting character provided in the embodiments of the present disclosure, the key light on instruction is received, the key light on instruction including the second character in the second character set correlated with the first character and determined according to the first character input by the user, and the second character set including at least one second character; the corresponding relationship between a character and a key identifier is inquired according to the key light on instruction to obtain the target key identifier corresponding to each second character; the key light corresponding to the target key indicated by the target key identifier is controlled to emit the light with the preset color, the light with the preset color for prompting the user to input character. With the embodiments of the present disclosure, by controlling the key light corresponding to the target key indicated by the target key identifier to emit the light with the preset color so as to prompt the user to input character, the problems of low inputting efficiency and input error in the related art are solved, and thus effects of improving the inputting efficiency and avoiding the input error are achieved.

Alternatively, the step 303 may include:
controlling the key light corresponding to the target key indicated by the target key identifier on and to emit the light with the preset color;
controlling key lights corresponding to keys on a keyboard other than the target key off.

Alternatively, keys on a keyboard include function keys, and the step 303 may include:
controlling the key light corresponding to the target key indicated by the target key identifier to emit a light with a first preset color;
controlling key lights corresponding to the function keys to emit a light with a second preset color;
controlling key lights corresponding to keys on a keyboard other than the target key and the function keys to emit a light with a third preset color;
in which the first preset color, the second preset color and the third preset color are different from each other.

Alternatively, keys on a keyboard include function keys, and the step 303 may include:
controlling the key light corresponding to the target key indicated by the target key identifier to emit a light with a first preset color;
controlling key lights corresponding to the function keys to emit a light with a second preset color;
controlling key lights corresponding to keys on a keyboard other than the target key and the function keys off;
in which the first preset color is different from the second preset color.

Alternatively, the step 303 may include:
controlling the key light corresponding to the target key indicated by the target key identifier to emit the light with the preset color and to flash.

Alternatively, the second character set includes at least two second characters, and the step 303 may include:
determining a correlation degree between each second character and the first character respectively to obtain at least two correlation degrees;
controlling a key light corresponding to a target key indicated by the target key identifier corresponding to each second character to emit the light with the preset color;
in which a strength of a light emitted by a key light corresponding to any one target key is positively correlated with the correlation degree between a second character corresponding to the any one target key and the first character.

Alternatively, the second character set includes at least two second characters, the at least two second characters are arranged in sequence, and the step 303 may include:
controlling a key light corresponding to a target key indicated by a target key identifier corresponding to each second character to emit the light with the preset color in sequence according to an arrange sequence of the at least two second characters.

All of the alternative technical solutions above may be combined in any form to form alternative embodiments of the present disclosure, which will not be elaborated herein.

In conclusion, in the method for inputting character provided in the present disclosure, the key light on instruction is received, the key light on instruction including the second character in the second character set correlated with the first character and determined according to the first character input by the user, and the second character set including at least one second character; the corresponding relationship between a character and a key identifier is inquired according to the key light on instruction to obtain the target key identifier corresponding to each second character; the key light corresponding to the target key indicated by the target key identifier is controlled to emit the light with the preset color, the light with the preset color for prompting the user to input character. With the embodiments of the present disclosure, by controlling the key light corresponding to the target key indicated by the target key identifier to emit the light with the preset color so as to prompt the user to input character, the problems of low inputting efficiency and input error in the related art are solved, and thus effects of improving the inputting efficiency and avoiding the input error are achieved.

Fig. 4 is a flow chart of a method for inputting character, according to yet another exemplary embodiment. This embodiment will be described taking an example of applying this method for inputting character in the terminal 01 of the implementation environment shown in Fig. 1-1. With reference to Fig. 4, the method for inputting character may include following steps.

In step 401, a first character input by a user is received.

In step 402, a second character set correlated with the first character is determined, the second character set including at least one second character.

In step 403, a key light on instruction is sent, the key light on instruction including a second character in the second character set, such that a keyboard inquiries a corresponding relationship between a character and a key identifier to obtain a target key identifier corresponding to each second character according to the key light on instruction, and controls a key light corresponding to a target key indicated by the target key identifier to emit a light with a preset color, the light with the preset color for prompting the user to input character.

In conclusion, in the method for inputting character provided in the embodiments of the present disclosure, the first character input by the user is received; the second character set correlated with the first character is determined, the second character set including at least one second character; the key light on instruction is sent, the key light on instruction including the second character in the second character set, such that the keyboard inquiries the corresponding relationship between a character and a key identifier to obtain the target key identifier corresponding to each second character according to the key light on instruction, and controls the key light corresponding to the target key indicated by the target key identifier to emit the light with the preset color, the light with the preset color for prompting the user to input character. With the embodiments of the present disclosure, by controlling the key light corresponding to the target key indicated by the target key identifier to emit the light with the preset color so as to prompt the user to input character, the problems of low inputting efficiency and input error in the related art are solved, and thus effects of improving the inputting efficiency and avoiding the input error are achieved.

Alternatively, the step 402 may include:
determining a target word-stock, the target word-stock being a word-stock corresponding to an input method currently used by the user or a word-stock established by words input by the user, and the target word-stock for recording a correlation relationship between different characters;
obtaining the second character set by inquiring the target word-stock according to the first character.

Alternatively, after the step 403, the method further includes:
receiving a third character input by the user;
judging whether a character identical to the third character exists in the second character set;
updating the target word-stock according to the first character and the third character, if the character identical to the third character does not exist in the second character set.

Alternatively, updating the target word-stock according to the first character and the third character, includes:
sending an enquiry request to a server, the enquiry request including an item to be inquired consisting of the first character and the third character arranged in sequence;
receiving an enquiry response sent from the server, the enquiry response generated by inquiring a word-stock in the server by the server;
recording a correlation relationship between the first character and the third character in the target word-stock, if the enquiry response indicates that the item to be inquired exists in the word-stock in the server.

Alternatively, updating the target word-stock according to the first character and the third character, includes:
displaying update promoting information to the user;
receiving an update instruction triggered by the user according to the update promoting information, the update instruction including an item to be inquired consisting of the first character and the third character arranged in sequence;
recording a correlation relationship between the first character and the third character in the target word-stock.

All of the alternative technical solutions above may be combined in any form to form alternative embodiments of the present disclosure, which will not be elaborated herein.

In conclusion, in the method for inputting character provided in the present disclosure, the first character input by the user is received; the second character set correlated with the first character is determined, the second character set including at least one second character; the key light on instruction is sent, the key light on instruction including the second character in the second character set, such that the keyboard inquiries the corresponding relationship between a character and a key identifier to obtain the target key identifier corresponding to each second character according to the key light on instruction, and controls the key light corresponding to the target key indicated by the target key identifier to emit the light with the preset color, the light with the preset color for prompting the user to input character. With the embodiments of the present disclosure, by controlling the key light corresponding to the target key indicated by the target key identifier to emit the light with the preset color so as to prompt the user to input character, the problems of low inputting efficiency and input error in the related art are solved, and thus effects of improving the inputting efficiency and avoiding the input error are achieved.

Fig. 5-1 is a flow chart of a method for inputting character, according to yet another exemplary embodiment. This embodiment will be described taking an example of applying this method for inputting character in the implementation environment shown in Fig. 1-1, and a keyboard with a processing function. If the keyboard is an external device of a terminal, the keyboard is provided with a processor or an integrated circuit (IC for short), which can communicate with a processor of the terminal via an Input/Output interface of the terminal. If the keyboard is an internal device of the terminal, the keyboard is connected with an independent processor or a processing IC, which is connected to the processor of the terminal. With reference to Fig. 5-1, the method for inputting character may include following steps.

In step 501, the terminal receives a first character input by a user.

A type of the first character may include any one of letter and stroke, which is not limited by the embodiments of the present disclosure. This embodiment will be described taking an example of the type of the first character being letter.

In the embodiment of the present disclosure, a character input instruction is triggered by the user by operating character keys on the keyboard of the terminal. The character input instruction may carry a character provided on the key operated by the user, and this character is the first character. The terminal may receive and analyze the character input instruction to obtain the first character, and thus the terminal realizes a receiving for the first character.

Illustratively, provided that the key currently operated by the user is a key provided with a character "h" on the keyboard 012 shown in Fig. 1-3, the character input instruction triggered by the user may carry the character "h", the terminal may analyze the character input instruction to obtain the character "h", and the character "h" is also the first character.

In step 502, the terminal determines a second character set correlated with the first character, the second character set including at least one second character.

A type of the second character is identical with that of the first character, that is, if the type of the first character is letter, then the type of the second character is letter, and if the type of the first character is stroke, then the type of the second character is stroke. In this embodiment, since the type of the first character is letter, then the type of the second character is letter.

Illustratively, with reference to Fig. 5-2, Fig. 5-2 illustrates a flow chart of a method for determining a second character set correlated with a first character by a terminal according to the embodiment shown in Fig. 5-1. With reference to Fig. 5-2, the method may include following steps.

In sub-step 5021, the terminal determines a target word-stock, the target word-stock being a word-stock corresponding to an input method currently used by the user or a word-stock established by words input by the user, and the target word-stock for recording a correlation relationship between different characters.

In the embodiments of the present disclosure, different input methods may correspond to different word-stocks, and thus the second character set correlated with the first character determined by the terminal may varied with different input methods. Therefore, the terminal may first determine the target word-stock, and then may determine the second character set correlated with the first character in the target word-stock. The target word-stock is for recording the correlation relationship between different characters. It should be illustrated that in the embodiments of the present disclosure, the input method may include but is not limited to Five Strokes Input, Sogou Input, Baidu Input, Pinxin Input, etc., which is not limited by the embodiments of the present disclosure.

Illustratively, before inputting the first character to the terminal, the user may select an input method. For selecting an input method, the user may trigger an input method selecting instruction which carries a target input method selected by the user, the terminal may receive the input method selecting instruction triggered by the user and analyzes the input method selecting instruction to obtain the target input method selected by the user. The terminal may store a corresponding relationship between an input method and a word-stock. When obtaining the target input method selected by the user, the terminal inquiries the corresponding relationship between an input method and a word-stock stored in the terminal to obtain the target word-stock corresponding to the target input method selected by the user.

Illustratively, the corresponding relationship between an input method and a word-stock stored in the terminal may be as shown in Table 1.

**Table 1**

| Input Method | Word-stock |
|---|---|
| Five Strokes Input | Word-stock 1 |
| Baidu Input | Word-stock 2 |
| Sogou Input | Word-stock 3 |
| Pinxin Input | Word-stock 4 |
| ...... | ...... |

Provided that the target input method selected by the user is Sogou Input, the terminal may obtain that the word-stock corresponding to the target input method is Word-stock 3 according to the corresponding relationships shown in the enquiry table 1 of target input method and then determine the Word-stock 3 as the target word-stock.

In sub-step 5022, the terminal obtains the second character set by inquiring the target word-stock according to the first character.

After determining the target word-stock, the terminal may inquiry the target word-stock according to the first character to obtain the second character set. Illustratively, the terminal inquiries the word-stock 3 according to the first character "h" to obtain the second character set.

In the embodiments of the present disclosure, the target word-stock is for recording a correlation relationship between different characters. Alternatively, the target word-stock records characters and correlation degrees between different characters. Illustratively, in the embodiments of the present disclosure, the target word-stock may be shown as Table 2 below.

**Table 2 (Word-stock 3)**

| first character | second character | correlation degree | possibly corresponding word |
|---|---|---|---|
| h | e | 90% | hello |
| | i | 60% | hi |
| | a | 20% | ha |
| a | m | 100% | am |
| | i | 80% | ai |
| | t | 50% | at |
| ...... | ...... | ...... | ...... |

Illustratively, the terminal inquiries the word-stock 3 shown in Table 2 according to the first character "h" to obtain the second character set including the second characters "e", "i" and "a", in which a correlation degree between the second character "e" and the first character "h" is 90%, a correlation degree between the second character "i" and the first character "h" is 60%, and a correlation degree between the second character "a" and the first character "h" is 20%, as well as a possible word formed by arranging the first character "h" and the second character "e" in sequence is "hello", a possible word formed by arranging the first character "h" and the second character "i" in sequence is "hi", and a possible word formed by arranging the first character "h" and the second character "a" in sequence is "ha".

It should be illustrated that, in the embodiments of the present disclosure, the terminal may adjust the correlation degree between characters according to an input habit of the user and the like. Taking Table 2 above as an example, when detecting that a probability of the word "hi" input by the user within a certain period of time is relatively higher, the terminal may adjust the correlation degree between the second character "i" and the first character "h" to be 100%, which is not limit by the embodiments of the present disclosure.

It also should be illustrated that, the target word-stock provided in the embodiments of the present disclosure is exemplary, which cannot be conducted to limit the present disclosure. In practice, the number of characters in the target word-stock is much greater than the number shown in Table 2.

It also should be illustrated that, the embodiment of the present disclosure takes that the types of the first character and the second character both are letter as an example. In practice, both the types of the first character and the second character may be stroke (i.e., etymon). In this case, after obtaining the first character, the terminal may determine a first Chinese character corresponding to the first character, then determines a second Chinese character capable of forming a term with the first Chinese character, and thus an etymon of the second Chinese character is determined and used as the second character. If the types of the first character and the second character both are stroke, the process of obtaining the second character by the terminal may refer to the related art, which will not be elaborated herein.

In step 503, the terminal inquiries a corresponding relationship between a character and a key identifier to obtain a target key identifier corresponding to each second character.

In the embodiment of the present disclosure, a character may be provided to a key of the keyboard, and the terminal may store the corresponding relationship between a character and a key identifier, and may inquiry the corresponding relationship between a character and a key identifier to obtain a target key identifier corresponding to each second character. Illustratively, the corresponding relationship between a character and a key identifier stored in the terminal may be shown in Table 3 below.

**Table 3**

| character | key identifier |
|---|---|
| a | ID-A |
| b | ID-B |
| e | ID-E |
| i | ID-I |
| h | ID-H |
| ...... | ...... |

The terminal inquiries the corresponding relationship shown in Table 3 to obtain that the target key identifier corresponding to the second character "e" is ID-E, the target key identifier corresponding to the second character "i" is ID-I, and the target key identifier corresponding to the second character "a" is ID-A.

In step 504, the terminal controls a key light corresponding to a target key indicated by the target key identifier to emit a light with a preset color, the light with the preset color for prompting the user to input character.

After determining the target key identifier corresponding to each second character, the terminal may control the key light corresponding to the target key indicated by each target key identifier to emit the light with the preset color. Illustratively, the terminal first determines the key light corresponding to the target key indicated by each target key identifier, and then controls the key light to emit the light with the preset color.

In the embodiment of the present disclosure, the terminal may also store a corresponding relationship between a key identifier and a key light identifier. The terminal may obtain the target key light identifier corresponding to the target key identifier by inquiring the corresponding relationship between a key identifier and a key light identifier according to the target key identifier, thus controlling the key light indicated by the target key light identifier to emit the light with the preset color.

Illustratively, the corresponding relationship between the key identifier and the key light identifier stored in the terminal may be shown in Table 4 below.

**Table 4**

| key identifier | key light identifier |
|---|---|
| ID-A | ID-1 |
| ID-B | ID-2 |
| ID-E | ID-3 |
| ID-I | ID-4 |
| ID-H | ID-5 |
| ...... | ...... |

The terminal inquiries the corresponding relationship shown in Table 4 to obtain that the target key light identifier corresponding to the target key identifier ID-E is ID-3, the target key light identifier corresponding to the target key identifier ID-I is ID-4, and the target key light identifier corresponding to the target key identifier ID-A is ID-1. Further, the terminal controls the target key light indicated by the target key light identifier ID-3, the target key light indicated by the target key light identifier ID-4 and the target key light indicated by the target key light identifier ID-1 to emit the light with the preset color.

The preset color may be yellow, green, red, white, blue and the like, which is not limited by the embodiments of the present disclosure. In the embodiments of the present disclosure, each key corresponds to one key light, any one key light is used to illuminate a key corresponding to the any one key light, and the colors of the lights emitted by any two key lights may be identical or different, which is not limited by the embodiments of the present disclosure. The terminal may control the key light corresponding to the target key indicated by the target key identifier on and to emit the light with the preset color, and may control key lights corresponding to keys other than the target key off, such that a light difference between the target key and keys other than the target key on the keyboard is relatively large, thus realizing a prompt for the user; or the terminal may control the color of the light emitted by the key light corresponding to the target key indicated by the target key identifier is much different from the color of the light emitted by key lights corresponding to keys other than the target key to realize the prompt for the user; or the terminal may also control the key light corresponding to the target key indicated by the target key identifier to emit the light with the preset color and to flash to realize the prompt for the user; or the terminal may also control the strength of the light emitted by the key light corresponding to the target key indicated by the target key identifier to realize the prompt for the user; or the terminal may also control a key light corresponding to a target key indicated by a target key identifier corresponding to each second character to emit the light with the preset color in sequence according to an arrange sequence of the at least two second characters to realize the prompt for the user, which is not limited by the embodiments of the present disclosure.

Illustratively, with reference to Fig. 5-3, Fig. 5-3 illustrates a flow chart of a method for controlling a key light corresponding to a target key indicated by a target key identifier to turn on and to emit a light with a preset color by the terminal according to the embodiment shown in Fig. 5-1. Referring to Fig. 5-3, the method flow may include following steps.

In sub-step 5041a, the terminal controls the key light corresponding to the target key indicated by the target key identifier on and to emit the light with the preset color.

The terminal may switch on a switch of the key light (the target key light) corresponding to the target key indicated by the target key identifier such that the key light corresponding to the target key indicated by the target key identifier is turned on. Illustratively, the terminal switches on a switch of the key light corresponding to the target key indicated by the target key identifier ID-E, a switch of the key light corresponding to the target key indicated by the target key identifier ID-I, and a switch of the key light corresponding to the target key indicated by the target key identifier ID-A, respectively, such that the key light corresponding to the target key indicated by the target key identifier ID-E, the key light corresponding to the target key indicated by the target key identifier ID-I, and the key light corresponding to the target key indicated by the target key identifier ID-A are turned on.

Illustratively, in the embodiments of the present disclosure, the preset color may be preset. Each key light may emit a light with one color so that the color of the light emitted by each key light may be preset. Thus, the terminal may control the switch of the key light corresponding to the target key indicated by the target key identifier on, such that the key light corresponding to the target key is turned on and emits the light with the preset color. For example, the terminal controls the key light corresponding to each of the target keys provided with the second characters "e", "i" and "a" respectively, such that the key light corresponding to each of the target keys provided with the second characters "e", "i" and "a" is turned on respectively and emits the light with the preset color.

Yet illustratively, the key light corresponding to each key may emit lights with multiple colors, and the color of the light may be controlled by a supply voltage of the key light. Thus, the terminal may control the supply voltage of the key light corresponding to the target key indicated by the target key identifier, such that the key light corresponding to the target key indicated by the target key identifier emits the light with the preset color. The realization process for the supply voltage of the key light corresponding to the target key indicated by the target key identifier may refer to the related art, which is not elaborated herein. For example, the terminal controls the supply voltage of the key light corresponding to each of the target keys provided with the second characters "e", "i" and "a" respectively, such that the key light corresponding to each of the target keys provided with the second characters "e", "i" and "a" is turned on respectively and emits the light with the preset color.

Yet illustratively, each key corresponds to one key light group, each key light group includes at least one key light, each key light may emit a light with one color, and each key light corresponds to one switch. The terminal may control a switch corresponding to one key light in a key light group corresponding to the target key indicated by the target key identifier to be turned on, such that the one key light in the key light group corresponding to the target key indicated by the target key identifier emits the light with the preset color, and thus the key light group corresponding to the target key indicated by the target key identifier emits the light with the preset color. For example, the terminal controls the switch of one key light in the key light group corresponding to each of the target keys provided with the second characters "e", "i" and "a" respectively on, such that one key light in the key light group corresponding to each of the target keys provided with the second characters "e", "i" and "a" emits the light with the preset color, and thus the key light corresponding to each of the target keys provided with the second characters "e", "i" and "a" emits the light with the preset color

In sub-step 5042a, the terminal controls key lights corresponding to keys on the keyboard other than the target key off.

The terminal may switch off switches of key lights corresponding to keys on the keyboard other than the target key, such that the key lights corresponding to the keys on the keyboard other than the target key are turned off. Illustratively, the terminal switches off switches of key lights corresponding to keys on the keyboard other than the target keys provided with the second characters "e", "i" and "a", such that the key lights corresponding to the keys on the keyboard other than the target keys provided with the second characters "e", "i" and "a" are turned off.

Alternatively, with reference to Fig. 5-4, Fig. 5-4 illustrating a schematic diagram illustrating controlling a key light corresponding to a target key indicated by a target key identifier to turn on and to emit a light with a preset color by the terminal according to the embodiment shown in Fig. 5-3. Referring to Fig. 5-4, the key light corresponding to each of the target keys provided with the second characters "e", "i" and "a" in the keyboard is turned on and emits the light with the preset color respectively, and the key lights corresponding to the keys in the keyboard other than the target keys provided with the second characters "e", "i" and "a" are turned off. It should be note that, in Fig. 5-4, each of keys provided with a filling graph represents that a key light corresponding to each of the keys is turned on and each of keys not provided with the filling graph represents that a key light corresponding to each of the keys is turned off.

In the embodiments of the present disclosure, keys on the keyboard may include function keys. The function keys may include keys provided with numbers, punctuation marks and space bars, which is not limited by the embodiments of the present disclosure. Illustratively, with reference to Fig. 5-5, Fig. 5-5 illustrates a flow chart of a method for controlling a key light corresponding to a target key indicated by a target key identifier to emit a light with a preset color by another terminal according to the embodiment shown in Fig. 5-1. Referring to Fig. 5-5, the method may include following steps.

In sub-step 5041b, the terminal controls the key light corresponding to the target key indicated by the target key identifier to emit a light with a first preset color.

In sub-step 5042b, the terminal controls key lights corresponding to the function keys to emit a light with a second preset color.

In sub-step 5043b, the terminal controls key lights corresponding to keys on a keyboard other than the target key and the function keys to emit a light with a third preset color.

The first preset color, the second preset color and the third preset color are different from each other.

The realization process from sub-step 5041b to sub-step 5043b may refer to sub-step 5041a in the embodiment shown in Fig. 5-3, which will not be elaborated in this embodiment of the present disclosure. Illustratively, with reference to Fig. 5-6, Fig. 5-6 is a schematic diagram illustrating controlling a key light corresponding to a target key indicated by a target key identifier to emit a light with a preset color by the terminal according to the embodiment shown in Fig. 5-5. Referring to Fig. 5-6, the key lights corresponding to the target keys provided with the second characters "e", "i" and "a" on the keyboard 012 are turned on and emit the light with the first preset color, the key lights corresponding to the function keys on the keyboard 012 are turned on and emit the light with the second preset color, and key lights corresponding to keys on the keyboard 012 other than the target keys provided with the second characters "e", "i" and "a" and the function keys are turned on and emit a light with a third preset color. It should be noted that, the keys in Fig. 5-6 are filled with different patterns to distinct the first preset color, the second preset color and the third preset color.

In the embodiments of the present disclosure, keys on the keyboard may include function keys. The function keys may include keys provided with numbers, punctuation marks and space bars, which is not limited by the embodiments of the present disclosure. Illustratively, with reference to Fig. 5-7, Fig. 5-7 illustrates a flow chart of a method for controlling a key light corresponding to a target key indicated by a target key identifier to emit a light with a preset color by yet another terminal according to the embodiment shown in Fig. 5-1. Referring to Fig. 5-7, the method may include following steps.

In sub-step 5041c, the terminal controls the key light corresponding to the target key indicated by the target key identifier to emit a light with a first preset color.

In sub-step 5042c, the terminal controls key lights corresponding to the function keys to emit a light with a second preset color.

The first preset color is different from the second preset color

In the embodiments of the present disclosure, the realization process of sub-step 5041c and sub-step 5042c may refer to sub-step 5041a in the embodiment shown in Fig. 5-3, which will not be elaborated in this embodiment of the present disclosure.

In sub-step 5043c, the terminal controls key lights corresponding to keys on the keyboard other than the target key and the function keys off.

The realization process of sub-step 5043c may refer to sub-step 5042a in the embodiment shown in Fig. 5-3, which will not be elaborated in this embodiment of the present disclosure.

Illustratively, with reference to Fig. 5-8, Fig. 5-8 is a schematic diagram illustrating controlling a key light corresponding to a target key indicated by a target key identifier to emit a light with a preset color by the terminal according to the embodiment shown in Fig. 5-7. Referring to Fig. 5-8, the key lights corresponding to the target keys provided with the second characters "e", "i" and "a" on the keyboard 012 are turned on and emit the light with the first preset color, the key lights corresponding to the function keys on the keyboard 012 are turned on and emit the light with the second preset color, and key lights corresponding to keys on the keyboard 012 other than the target keys provided with the second characters "e", "i" and "a" and the function keys are turned off. It should be noted that, the keys in Fig. 5-8 are filled with different patterns to distinct the first preset color and the second preset color, and the keys without any filling pattern represents that the key lights corresponding to the keys are turned off.

Alternatively, in the embodiments of the present disclosure, the terminal controlling a key light corresponding to a target key indicated by the target key identifier to emit a light with a preset color may further include: the terminal controlling the key light corresponding to the target key indicated by the target key identifier to emit the light with the preset color and to flash. Illustratively, with reference to Fig. 5-9, Fig. 5-9 is a flow chart of a method for controlling a key light corresponding to a target key indicated by a target key identifier to emit a light with a preset color by yet another terminal according to the embodiment shown in Fig. 5-1. The method may include following steps.

In sub-step 5041d, the terminal controls the key light corresponding to the target key indicated by the target key identifier to emit the light with the preset color and to flash.

Illustratively, the terminal controls the key lights corresponding to the target keys provided with the second characters "e", "i" and "a" respectively to emit the lights with the preset colors and to flash. The terminal may switch on and off intermittently the switches of the key lights corresponding to the target keys indicated by the target key identifiers, such that the key lights corresponding to the target keys indicated by the target key identifiers flash, which is not limited by the embodiments of the present disclosure.

In the embodiments of the present disclosure, the second character set includes at least two second characters, the correlation degree between each second character and the first character may be different, and the terminal may control the key light corresponding to the target key indicated by the target key identifier corresponding to the second character to emit the light with the preset color according to the correlation degree between the second character and the first character. Illustratively, with reference to Fig. 5-10, Fig. 5-10 is a flow chart of a method for controlling a key light corresponding to a target key indicated by a target key identifier to emit a light with a preset color by yet another terminal according to the embodiment shown in Fig. 5-1. The method may include following steps.

In sub-step 5041e, the terminal determines a correlation degree between each Fig. 5-1second character and the first character respectively to obtain at least two correlation degrees.

The terminal may determine the correlation degree between each second character and the first character to obtain the at least two correlation degrees. In the embodiments of the present disclosure, because the number of the second characters is 3, the terminal may obtain at least 3 correlation degrees.

With reference to step 502, it can be seen that the correlation degree between the second character and the first character is recorded in the word-stock stored in the terminal, and thus the terminal may determine the correlation degree between each second character and the first character by inquiring the correlation relationship shown in Table 2. With reference to Table 2, it may be seen that the correlation degree between the second character "e" and the first character "h" is 90%, the correlation degree between the second character "i" and the first character "h" is 60%, and the correlation degree between the second character "a" and the first character "h" is 20%.

In sub-step 5042e, the terminal controls a key light corresponding to a target key indicated by a target key identifier corresponding to each second character to emit the light with the preset color, and a strength of a light emitted by a key light corresponding to any one target key is positively correlated with the correlation degree between a second character corresponding to the any one target key and the first character.

After obtaining the at least 3 correlation degrees, the terminal may compare the at least 3 correlation degrees so as to determine a sequence of the at least 3 correlation degrees, and then controls the key light corresponding to the target key provided with a corresponding second character to emit the light with the preset color, such that the strength of the light emitted by the key light corresponding to any one target key is positively correlated with the correlation degree between the second character corresponding to the any one target key and the first character.

Illustratively, with reference to sub-step 5041e, it may be seen that the correlation degree between the second character "e" and the first character "h" is 90%, the correlation degree between the second character "i" and the first character "h" is 60%, and the correlation degree between the second character "a" and the first character "h" is 20%. Because 90% is greater than 60%, and 60% is greater than 20%, the terminal controls the key lights corresponding to the target keys provided with the second characters "e", "i" and "a" respectively to emit the lights with the preset colors, and enables the strength of the light emitted by the key light corresponding to the target key provided with the second character "e" greater than that of the light emitted by the key light corresponding to the target key provided with the second character "i", and enables the strength of the light emitted by the key light corresponding to the target key provided with the second character "i" greater than that of the light emitted by the key light corresponding to the target key provided with the second character "a".

Illustratively, with reference to Fig. 5-11, Fig. 5-11 is a schematic diagram illustrating controlling a key light corresponding to a target key indicated by a target key identifier to emit a light with a preset color by the terminal according to the embodiment shown in Fig. 5-10. Referring to Fig. 5-11, the key lights corresponding to the target keys on the keyboard 012 provided with the second characters "e", "i" and "a" are turned on and emit the lights with the preset colors, the strength of the light emitted by the key light corresponding to the target key provided with the second character "e" greater than that of the light emitted by the key light corresponding to the target key provided with the second character "i", and the strength of the light emitted by the key light corresponding to the target key provided with the second character "i" greater than that of the light emitted by the key light corresponding to the target key provided with the second character "a". It should be noted that, the keys in Fig. 5-11 are filled with patterns of different densities to distinct the strength of the light emitted by the key light corresponding to the target key.

In the embodiments of the present disclosure, the second character set includes at least two second characters, the at least two second characters are arranged in sequence. For example, the at least two second characters are arranged based on the correlation degree between the second character and the first character from the greatest to the least, and the terminal may control the key light corresponding to the target key indicated by the target key identifier corresponding to the second character to emit the light with the preset color in sequence according to an arrange sequence of the at least two second characters. Illustratively, with reference to Fig. 5-12, Fig. 5-12 is a flow chart of a method for controlling a key light corresponding to a target key indicated by a target key identifier to emit a light with a preset color by yet another terminal according to the embodiment shown in Fig. 5-1. Referring to Fig. 5-12, the method may include following steps.

In sub-step 5041f, the terminal controls the key light corresponding to the target key indicated by the target key identifier corresponding to each second character to emit the light with the preset color in sequence according to the arrange sequence of the at least two second characters.

Provided that the at least two second characters are arranged based on the correlation degree between the second character and the first character from the greatest to the least, then the arrange sequence of the second characters correlated with the first character may be "e", "i" and "a", and the terminal controls the key light corresponding to the target key indicated by the target key identifier corresponding to each second character to emit the light with the preset color in sequence. For example, the terminal first controls the key light corresponding to the target key indicated by the target key identifier corresponding to the second character "e" to emit the light with the preset color, after a preset period of time (such as 0.5 seconds), the terminal controls the key light corresponding to the target key indicated by the target key identifier corresponding to the second character "e" off, the terminal controls the key light corresponding to the target key indicated by the target key identifier corresponding to the second character "i" to emit the light with the preset color, again after a preset period of time, the terminal controls the key light corresponding to the target key indicated by the target key identifier corresponding to the second character "i" off, and the terminal controls the key light corresponding to the target key indicated by the target key identifier corresponding to the second character "a" to emit the light with the preset color, and so on.

In step 505, the terminal receives a third character input by the user.

After the terminal controls the key light corresponding to the target key indicated by the target key identifier to emit the light with the preset color, the user may input character according to the prompt of the terminal. Illustratively, the user operates the key on the keyboard provided with the third character to trigger the character input instruction. The character input instruction may carry the third character, and the terminal may receive and analyze the character input instruction to obtain the third character, thus realizing a receiving of the third character.

It should be noted that, in the embodiments of the present disclosure, the third character input by the user may be the character in the second character set or may not be the character in the second character set. If the third character input by the user is not the character in the second character set, the target word-stock stored in the terminal may not include an item consisting of the first character and the third character arranged.

In step 506, the terminal judges whether a character identical to the third character exists in the second character set.

After receiving the third character, the terminal may judge whether the character identical to the third character exists in the second character set. The terminal may judge whether the character identical to the third character exists in the second character set by inquiring the second character set according to the third character.

Illustratively, provided that the third character is "u", the terminal inquiries the second character set according to the third character "u". Since the characters in the second character set are "e", "i" and "a", the terminal may determine that the character identical to the third character does not exist in the second character set.

It should be noted that, the embodiments of the present disclosure take the third character being "u" as an example. However, when the third character is "a", the terminal may determines that the character identical to the third character exists in the second character set by inquiring the second character set, which will not be elaborated herein.

In step 507, the terminal updates the target word-stock according to the first character and the third character, if the character identical to the third character does not exist in the second character set.

If in step 506, the terminal determines that the character identical to the third character does not exist in the second character set, the terminal may update the target word-stock according to the first character and the third character. In the embodiments of the present disclosure, the terminal may update the target word-stock by communicating with the server or according to the user's operation, which is not limited by the embodiments of the present disclosure.

Illustratively, with reference to Fig. 5-13, Fig. 5-13 is a flow chart of a method for updating a target word-stock according to a first character and a third character by the terminal according to the embodiment shown in Fig. 5-1. Referring to Fig. 5-13, the method may include following steps.

In sub-step 5071a, the terminal sends an enquiry request to a server, the enquiry request including an item to be inquired consisting of the first character and the third character arranged in sequence.

The terminal may arrange the first character and the third character in sequence to form the item to be inquired, generates the enquiry request according to the item to be inquired and sends the enquiry request to the server. Illustratively, when the first character is "h" and the second character is "u", then the item to be inquired may be "hu".

In sub-step 5072a, the server receives the enquiry request sent from the terminal.

The server may receive the enquiry request when the terminal sends the enquiry request to the server.

In sub-step 5073a, the server inquiries the word-stock in the server according to the enquiry request.

Items in the word-stock of the server is more abundant than that in the target word-stock stored in the terminal, and thus an item which does not exist in the target word-stock may exist in the word-stock of the server. The server may inquire the word-stock in the server according to the enquiry request to obtain the correlation relationship between the first character and the third character. Illustratively, the correlation relationship between the first character and the third character may be 10%.

In sub-step 5074a, the server generates an enquiry response.

The server may generate the enquiry response after obtaining the correlation relationship between the first character and the third character. The enquiry response includes the correlation relationship between the first character and the third character.

In sub-step 5075a, the server sends the enquiry response to the terminal.

After generating the enquiry response, the server may send the enquiry response to the terminal.

In sub-step 5076a, the terminal receives the enquiry response sent from the server.

When the server sends the enquiry response to the terminal, the terminal may receive the enquiry response sent from the server.

In sub-step 5077a, the terminal records the correlation relationship between the first character and the third character in the target word-stock, if the enquiry response indicates that the item to be inquired exists in the word-stock in the server.

When the enquiry response includes the correlation relationship between the first character and the third character, the terminal may determine that the enquiry response indicates that the item to be inquired exists in the word-stock in the server. Therefore, the terminal records the correlation relationship between the first character and the third character in the target word-stock to obtain the updated target word-stock. Illustratively, the updated target word-stock may be shown in Table 5 below.

**Table 5 (Word-stock 3)**

| first character | second character | correlation degree | possibly corresponding word |
|---|---|---|---|
| h | e | 90% | hello |
| | i | 60% | hi |
| | a | 20% | ha |
| | u | 10% | hu |
| a | m | 100% | am |
| | i | 80% | ai |
| | t | 50% | at |
| ...... | ...... | ...... | ...... |

It should be noted that, the embodiment of the present disclosure takes an example that the item to be inquired exists in the word-stock in the server. However, when the item to be inquired does not exist in the word-stock in the server, the terminal may use the third character as the first character, and execute step 502 to step 505, or the terminal may also update the target word-stock by using the method shown in Fig. 5-14, which is not limited by the embodiments of the present disclosure.

Illustratively, with reference to Fig. 5-14, Fig. 5-14 is a flow chart of a method for updating a target word-stock according to a first character and a third character by another terminal according to the embodiment shown in Fig. 5-1. Referring to Fig. 5-14, the method may include following steps.

In sub-step 5071b, the terminal displays update promoting information to the user.

When the character identical to the third character does not exist in the second character set, the terminal may prompt the user, for example, the terminal may display the update promoting information to the user. The update promoting information may be voice information or text information, which is not limited by the embodiments of the present disclosure. Illustratively, the embodiment of the present disclosure takes an example that the update promoting information is the text information, and the terminal may display the update promoting information as "An item consisting of the character h and the character u does not exist in the target word-stock. Whether add the item to the word-stock?". Alternatively, the terminal may display a prompt box containing the update promoting information and display a "confirm" button.

In sub-step 5072b, the terminal receives an update instruction triggered by the user according to the update promoting information, the update instruction including an item to be inquired consisting of the first character and the third character arranged in sequence.

After the terminal displays the update promoting information to the user, the user may trigger the update instruction according to the update promoting information. Illustratively, the user clicks the "confirm" button in the prompt box to trigger the update instruction. The update instruction may include the item to be inquired consisting of the first character and the third character arranged in sequence. When the first character is "h" and the second character is "u", then the item to be inquired may be "hu".

In sub-step 5073b, the terminal records the correlation relationship between the first character and the third character in the target word-stock.

After receiving the updating instruction triggered by the user, the terminal may record the correlation relationship between the first character and the third character in the target word-stock. Illustratively, the terminal may determine an original correlation degree for the first character and the third character, and then adjusts the correlation degree between the first character and the third character according to an input probability of the first character and the third character by the user, which will not be elaborated in the embodiments of the present disclosure.

It should be noted that the embodiment shown in Fig. 5-1 of the present disclosure takes an example of using the terminal as an executing body. In practice, the executing body of the embodiment shown in Fig. 5-1 may be a processor of the terminal, or may also be a keyboard of the terminal, and a processor for executing the method for inputting character shown in Fig. 5-1 is integrated in the keyboard, which is not limited by the embodiments of the present disclosure.

It should be noted that, the order of the steps of the methods for inputting character provided by the embodiments of the present disclosure may be adjusted properly, and the steps may also be increased or reduced accordingly according to the practice. Any modified method, that may be thought by the person skilled in the art within the technical range disclosed in the present disclosure, should be included in the protection range of the present disclosure, which will not be elaborated herein.

In conclusion, with the method for inputting character provided in the embodiments of the present disclosure, the first character input by the user is received; the second character set correlated with the first character is determined, the second character set including at least one second character; by inquiring the corresponding relationship between a character and a key identifier, the target key identifier corresponding to each second character is obtained; and the key light corresponding to the target key indicated by the target key identifier is controlled to emit the light with the preset color, the light with the preset color for prompting the user to input character. With the embodiments of the present disclosure, by controlling the key light corresponding to the target key indicated by the target key identifier to emit the light with the preset color so as to prompt the user to input character, the problems of low inputting efficiency and input error in the related art are solved, and thus effects of improving the inputting efficiency and avoiding the input error are achieved.

Fig. 6-1 is a flow chart of a method for inputting character, according to yet another exemplary embodiment. This embodiment will be described taking an example of applying this method for inputting character in the implementation environment shown in Fig. 1-1. In the implementation environment shown in Fig. 1-1, the terminal is provided with a keyboard. If the keyboard is an external device of a terminal, the keyboard can communicate with a processor of the terminal via an Input/Output interface of the terminal. If the keyboard is an internal device of the terminal, the keyboard is connected with the processor of the terminal. With reference to Fig. 6-1, the method for inputting character may include following steps.

In step 601, the terminal receives a first character input by a user.

In practice, the step 601 may be that the keyboard receives the first character input by the user and transmits the first character to the processor of the terminal.

In step 602, the terminal determines a second character set correlated with the first character, the second character set including at least one second character.

Illustratively, with reference to Fig. 6-2, Fig. 6-2 is a flow chart of a method for determining a second character set correlated with a first character by a terminal according to the embodiment shown in Fig. 6-1. Referring to Fig. 6-2, the method may include following steps.

In sub-step 6021, the terminal determines a target word-stock, the target word-stock being a word-stock corresponding to an input method currently used by the user or a word-stock established by words input by the user, and the target word-stock for recording a correlation relationship between different characters.

In sub-step 6022, the terminal obtains the second character set by inquiring the target word-stock according to the first character.

Step 601 and step 602 may refer to step 501 and step 502 in the embodiment shown in Fig. 5-1, which will not be elaborated in the present embodiment.

In step 603, the terminal sends a key light on instruction to the keyboard, the key light on instruction including the second character in the second character set.

The terminal sends the key light on instruction to the keyboard, such that the keyboard inquires a corresponding relationship between a character and a key identifier according to the key light on instruction to obtain a target key identifier corresponding to each second character, and controls a key light corresponding to a target key indicated by the target key identifier to emit a light with a preset color, the light with the preset color for prompting the user to input character.

In the embodiment of the present disclosure, the terminal may generate the key light on instruction firstly according to the second character in the second character set, and then sends the key light on instruction to the keyboard, which will not be elaborated in the embodiment of the present disclosure.

In step 604, the keyboard receives the key light on instruction sent from the terminal.

When the terminal sends the key light on instruction to the keyboard, the keyboard may receive the key light on instruction sent from the terminal. The key light on instruction includes a second character in a second character set correlated with a first character and determined according to the first character input by a user, and the second character set includes at least one second character.

In step 605, the keyboard inquiries a corresponding relationship between a character and a key identifier according to the key light on instruction to obtain the target key identifier corresponding to each second character.

Step 605 may refer to step 503 in the embodiment shown in Fig. 5-1, which will not be elaborated in the present embodiment.

In step 606, the keyboard controls a key light corresponding to a target key indicated by the target key identifier to emit a light with a preset color, the light with the preset color for prompting the user to input character.

Illustratively, with reference to Fig. 6-3, Fig. 6-3 is a flow chart of a method for controlling a key light corresponding to a target key indicated by a target key identifier to turn on and to emit a light with a preset color by a keyboard according to the embodiment shown in Fig. 6-1. Referring to Fig. 6-3, the method may include following steps.

In sub-step 6061a, the keyboard controls the key light corresponding to the target key indicated by the target key identifier on and to emit the light with the preset color.

In sub-step 6062a, the keyboard controls key lights corresponding to keys on a keyboard other than the target key off.

In the embodiment of the present disclosure, keys on the keyboard include function keys. The function keys may include keys provided with numbers, punctuation marks and space bars, which is not limited by the embodiments of the present disclosure. Illustratively, with reference to Fig. 6-4, Fig. 6-4 is a flow chart of a method for controlling a key light corresponding to a target key indicated by a target key identifier to turn on and to emit a light with a preset color by another keyboard according to the embodiment shown in Fig. 6-1. Referring to Fig. 6-4, the method may include following steps.

In sub-step 6061b, the keyboard controls the key light corresponding to the target key indicated by the target key identifier to emit a light with a first preset color.

In sub-step 6062b, the keyboard controls key lights corresponding to the function keys to emit a light with a second preset color.

In sub-step 6063b, the keyboard controls key lights corresponding to keys on a keyboard other than the target key and the function keys to emit a light with a third preset color.

The first preset color, the second preset color and the third preset color are different from each other.

In the embodiment of the present disclosure, keys on the keyboard include function keys. The function keys may include keys provided with numbers, punctuation marks and space bars, which is not limited by the embodiments of the present disclosure. Illustratively, with reference to Fig. 6-5, Fig. 6-5 is a flow chart of a method for controlling a key light corresponding to a target key indicated by a target key identifier to turn on and to emit a light with a preset color by yet another keyboard according to the embodiment shown in Fig. 6-1. Referring to Fig. 6-5, the method may include following steps.

In sub-step 6061c, the keyboard controls the key light corresponding to the target key indicated by the target key identifier to emit a light with a first preset color.

In sub-step 6062c, the keyboard controls key lights corresponding to the function keys to emit a light with a second preset color.

In sub-step 6063c, the keyboard controls key lights corresponding to keys on a keyboard other than the target key and the function keys off.

The first preset color is different from the second preset color.

Illustratively, with reference to Fig. 6-6, Fig. 6-6 is a flow chart of a method for controlling a key light corresponding to a target key indicated by a target key identifier to turn on and to emit a light with a preset color by yet another keyboard according to the embodiment shown in Fig. 6-1. Referring to Fig. 6-6, the method may include following steps.

In sub-step 6061d, the keyboard controls the key light corresponding to the target key indicated by the target key identifier to emit the light with the preset color and to flash.

In the embodiments of the present disclosure, the second character set includes at least two second characters, the correlation degree between each second character and the first character may be different, and the keyboard may control the key light corresponding to the target key indicated by the target key identifier corresponding to the second character to emit the light with the preset color according to the correlation degree between the second character and the first character. Illustratively, with reference to Fig. 6-7, Fig. 6-7 is a flow chart of a method for controlling a key light corresponding to a target key indicated by a target key identifier to turn on and to emit a light with a preset color by yet another keyboard according to the embodiment shown in Fig. 6-1. The method may include following steps.

In sub-step 6061e, the keyboard determines a correlation degree between each second character and the first character respectively to obtain at least two correlation degrees.

It should be noted that, since the target word-stock is stored in the terminal, the key light on instruction sent from the terminal to the keyboard may also include the correlation degree between the second character in the second character set and the first character, such that it is convenient for the keyboard to determine the correlation degree between each second character and the first character.

In sub-step 6062e, the keyboard controls a key light corresponding to a target key indicated by the target key identifier corresponding to each second character to emit the light with the preset color.

A strength of a light emitted by a key light corresponding to any one target key is positively correlated with the correlation degree between a second character corresponding to the any one target key and the first character.

In the embodiments of the present disclosure, the second character set includes at least two second characters, the at least two second characters are arranged in sequence. For example, the at least two second characters are arranged based on the correlation degree between the second character and the first character from the greatest to the least, and the keyboard may control the key light corresponding to the target key indicated by the target key identifier corresponding to the second character to emit the light with the preset color in sequence according to an arrange sequence of the at least two second characters. Illustratively, with reference to Fig. 6-8, Fig. 6-8 is a flow chart of a method for controlling a key light corresponding to a target key indicated by a target key identifier to turn on and to emit a light with a preset color by yet another keyboard according to the embodiment shown in Fig. 6-1. Referring to Fig. 6-8, the method may include following steps.

In sub-step 6061f, the keyboard controls the key light corresponding to the target key indicated by the target key identifier corresponding to each second character to emit the light with the preset color in sequence according to the arrange sequence of the at least two second characters.

The realization process of step 606 may refer to step 504 in the embodiment shown in Fig. 5-1, which will not be elaborated in the present embodiment.

In step 607, the terminal receives a third character input by the user.

In practice, in step 607 above, the keyboard receives the third character input by the user and transmits the third character to the processor of the terminal.

In step 608, the terminal judges whether a character identical to the third character exists in the second character set.

In step 609, the terminal updates the target word-stock according to the first character and the third character, if the character identical to the third character does not exist in the second character set.

Illustratively, with reference to Fig. 6-9, Fig. 6-9 is a flow chart of a method for updating a target word-stock according to a first character and a third character by the terminal according to the embodiment shown in Fig. 6-1. Referring to Fig. 6-9, the method may include following steps.

In sub-step 6091a, the terminal sends an enquiry request to a server, the enquiry request including an item to be inquired consisting of the first character and the third character arranged in sequence.

In sub-step 6092a, the server receives the enquiry request sent from the terminal.

In sub-step 6093a, the server inquiries the word-stock in the server according to the enquiry request.

In sub-step 6094a, the server generates an enquiry response.

In sub-step 6095a, the server sends the enquiry response to the terminal.

In sub-step 6096a, the terminal receives the enquiry response sent from the server.

In sub-step 6097a, the terminal records the correlation relationship between the first character and the third character in the target word-stock, if the enquiry response indicates that the item to be inquired exists in the word-stock in the server.

Illustratively, with reference to Fig. 6-10, Fig. 6-10 is a flow chart of a method for updating a target word-stock according to a first character and a third character by another terminal according to the embodiment shown in Fig. 6-1. Referring to Fig. 6-10, the method may include following steps.

In sub-step 6091b, the terminal displays update promoting information to the user.

In sub-step 6092b, the terminal receives an update instruction triggered by the user according to the update promoting information, the update instruction including an item to be inquired consisting of the first character and the third character arranged in sequence.

In sub-step 6093b, the terminal records the correlation relationship between the first character and the third character in the target word-stock.

The realization process from step 607 to step 609 may refer to step 505 to step 507 in the embodiment shown in Fig. 5-1, which will not be elaborated in the present embodiment.

It should be noted that, the order of the steps of the methods for inputting character provided by the embodiments of the present disclosure may be adjusted properly, and the steps may also be increased or reduced accordingly according to the practice. Any modified method, that may be thought by the person skilled in the art within the technical range disclosed in the present disclosure, should be included in the protection range of the present disclosure, which will not be elaborated herein.

In conclusion, with the method for inputting character provided in the embodiments of the present disclosure, the first character input by the user is received; the second character set correlated with the first character is determined, the second character set including at least one second character; by inquiring the corresponding relationship between a character and a key identifier, the target key identifier corresponding to each second character is obtained; and the key light corresponding to the target key indicated by the target key identifier is controlled to emit the light with the preset color, the light with the preset color for prompting the user to input character. With the embodiments of the present disclosure, by controlling the key light corresponding to the target key indicated by the target key identifier to emit the light with the preset color so as to prompt the user to input character, the problems of low inputting efficiency and input error in the related art are solved, and thus effects of improving the inputting efficiency and avoiding the input error are achieved.

The embodiments providing a device of the present disclosure are as follows. The device is used to implement the method according to the embodiments of the present disclosure. Concerning the details which are not described in the embodiments of the device, reference is made to the embodiments of the method.

Fig. 7 is a block diagram of a device 700 for inputting character, according to an exemplary embodiment. The device 700 for inputting character may be all or a part of a terminal in the implementation environment shown in Fig 1-1 realized by software, hardware or combinations thereof. Referring to Fig. 7, the device 700 for inputting character may include: a first receiving module 710, a determining module 720, an inquiring module 730 and a controlling module 740.

The first receiving module 710 is configured to receive a first character input by a user.

The determining module 720 is configured to determine a second character set correlated with the first character, the second character set including at least one second character.

The inquiring module 730 is configured to inquiry a corresponding relationship between a character and a key identifier to obtain a target key identifier corresponding to each second character.

The controlling module 740 is configured to control a key light corresponding to a target key indicated by the target key identifier to emit a light with a preset color, the light with the preset color for prompting the user to input character.

In conclusion, with the device for inputting character provided in the embodiments of the present disclosure, the first character input by the user is received; the second character set correlated with the first character is determined, the second character set including at least one second character; by inquiring the corresponding relationship between a character and a key identifier, the target key identifier corresponding to each second character is obtained; and the key light corresponding to the target key indicated by the target key identifier is controlled to emit the light with the preset color, the light with the preset color for prompting the user to input character. With the embodiments of the present disclosure, by controlling the key light corresponding to the target key indicated by the target key identifier to emit the light with the preset color so as to prompt the user to input character, the problems of low inputting efficiency and input error in the related art are solved, and thus effects of improving the inputting efficiency and avoiding the input error are achieved.

Fig. 8 is a block diagram of a device 800 for inputting character, according to another exemplary embodiment. The device 800 for inputting character may be all or a part of a terminal in the implementation environment shown in Fig 1-1 realized by software, hardware or combinations thereof. Referring to Fig. 8, the device 800 for inputting character may include but is not limited to: a first receiving module 810, a determining module 820, an inquiring module 830 and a controlling module 840.

The first receiving module 810 is configured to receive a first character input by a user.

The determining module 820 is configured to determine a second character set correlated with the first character, the second character set including at least one second character.

The inquiring module 830 is configured to inquiry a corresponding relationship between a character and a key identifier to obtain a target key identifier corresponding to each second character.

The controlling module 840 is configured to control a key light corresponding to a target key indicated by the target key identifier to emit a light with a preset color, the light with the preset color for prompting the user to input character.

Alternatively, the determining module 820 is configured to:
determine a target word-stock, the target word-stock being a word-stock corresponding to an input method currently used by the user or a word-stock established by words input by the user, and the target word-stock for recording a correlation relationship between different characters;
obtain the second character set by inquiring the target word-stock according to the first character.

Alternatively, further with reference to Fig. 8, the device 800 for inputting character may further include: a second receiving module 850, a judging module 860, an updating module 870.

The second receiving module 850 is configured to receive a third character input by the user.

The judging module 860 is configured to judge whether a character identical to the third character exists in the second character set.

The updating module 870 is configured to update the target word-stock according to the first character and the third character, if the character identical to the third character does not exist in the second character set.

Alternatively, the updating module 870 is configured to:
send an enquiry request to a server, the enquiry request including an item to be inquired consisting of the first character and the third character arranged in sequence;
receive an enquiry response sent from the server, the enquiry response generated by inquiring a word-stock in the server by the server;
record a correlation relationship between the first character and the third character in the target word-stock, if the enquiry response indicates that the item to be inquired exists in the word-stock in the server.

Alternatively, the updating module 870 is configured to:
display update promoting information to the user;
receive an update instruction triggered by the user according to the update promoting information, the update instruction including an item to be inquired consisting of the first character and the third character arranged in sequence;
record a correlation relationship between the first character and the third character in the target word-stock.

Alternatively, the controlling module 840 is configured to:
control the key light corresponding to the target key indicated by the target key identifier on and to emit the light with the preset color;
control key lights corresponding to keys on a keyboard other than the target key off.

Alternatively, keys on a keyboard include function keys, and the controlling module 840 is configured to:
control the key light corresponding to the target key indicated by the target key identifier to emit a light with a first preset color;
control key lights corresponding to the function keys to emit a light with a second preset color;
control key lights corresponding to keys on a keyboard other than the target key and the function keys to emit a light with a third preset color;
in which the first preset color, the second preset color and the third preset color are different from each other.

Alternatively, keys on a keyboard include function keys, and the controlling module 840 is configured to:
control the key light corresponding to the target key indicated by the target key identifier to emit a light with a first preset color;
control key lights corresponding to the function keys to emit a light with a second preset color;
control key lights corresponding to keys on a keyboard other than the target key and the function keys off;
in which the first preset color is different from the second preset color.

Alternatively, the controlling module 840 is configured to:
control the key light corresponding to the target key indicated by the target key identifier to emit the light with the preset color and to flash.

Alternatively, the second character set includes at least two second characters, the controlling module 840 is configured to:
determine a correlation degree between each second character and the first character respectively to obtain at least two correlation degrees;
control a key light corresponding to a target key indicated by a target key identifier corresponding to each second character to emit the light with the preset color;
in which a strength of a light emitted by a key light corresponding to any one target key is positively correlated with the correlation degree between a second character corresponding to the any one target key and the first character.

Alternatively, the second character set includes at least two second characters, the at least two second characters are arranged in sequence,
the controlling module 840 is configured to:
control a key light corresponding to a target key indicated by a target key identifier corresponding to each second character to emit the light with the preset color in sequence according to an arrange sequence of the at least two second characters.

In conclusion, with the device for inputting character provided in the embodiments of the present disclosure, the first character input by the user is received; the second character set correlated with the first character is determined, the second character set including at least one second character; by inquiring the corresponding relationship between a character and a key identifier, the target key identifier corresponding to each second character is obtained; and the key light corresponding to the target key indicated by the target key identifier is controlled to emit the light with the preset color, the light with the preset color for prompting the user to input character. With the embodiments of the present disclosure, by controlling the key light corresponding to the target key indicated by the target key identifier to emit the light with the preset color so as to prompt the user to input character, the problems of low inputting efficiency and input error in the related art are solved, and thus effects of improving the inputting efficiency and avoiding the input error are achieved.

Fig. 9 is a block diagram of a device 900 for inputting character, according to yet another exemplary embodiment. The device 900 for inputting character may be all or a part of a terminal in the implementation environment shown in Fig 1-1 realized by software, hardware or combinations thereof. Referring to Fig. 9, the device 900 for inputting character may include: a receiving module 910, an inquiring module 920 and a controlling module 930.

The receiving module 910 is configured to receive a key light on instruction, the key light on instruction including a second character in a second character set correlated with a first character and determined according to the first character input by a user, and the second character set including at least one second character.

The inquiring module 920 is configured to inquiry a corresponding relationship between a character and a key identifier according to the key light on instruction to obtain a target key identifier corresponding to each second character.

The controlling module 930 is configured to control a key light corresponding to a target key indicated by the target key identifier to emit a light with a preset color, the light with the preset color for prompting the user to input character.

In conclusion, in the device for inputting character provided in the embodiments of the present disclosure, the key light on instruction is received, the key light on instruction including the second character in the second character set correlated with the first character and determined according to the first character input by the user, and the second character set including at least one second character; the corresponding relationship between a character and a key identifier is inquired according to the key light on instruction to obtain the target key identifier corresponding to each second character; the key light corresponding to the target key indicated by the target key identifier is controlled to emit the light with the preset color, the light with the preset color for prompting the user to input character. With the embodiments of the present disclosure, by controlling the key light corresponding to the target key indicated by the target key identifier to emit the light with the preset color so as to prompt the user to input character, the problems of low inputting efficiency and input error in the related art are solved, and thus effects of improving the inputting efficiency and avoiding the input error are achieved.

Alternatively, the controlling module 930 is configured to:
control the key light corresponding to the target key indicated by the target key identifier on and to emit the light with the preset color;
control key lights corresponding to keys on a keyboard other than the target key off.

Alternatively, keys on a keyboard include function keys, and the controlling module 930 is configured to:
control the key light corresponding to the target key indicated by the target key identifier to emit a light with a first preset color;
control key lights corresponding to the function keys to emit a light with a second preset color;
control key lights corresponding to keys on a keyboard other than the target key and the function keys to emit a light with a third preset color;
in which the first preset color, the second preset color and the third preset color are different from each other.

Alternatively, keys on a keyboard include function keys, and the controlling module 930 is configured to:
control the key light corresponding to the target key indicated by the target key identifier to emit a light with a first preset color;
control key lights corresponding to the function keys to emit a light with a second preset color;
control key lights corresponding to keys on a keyboard other than the target key and the function keys off;
in which the first preset color is different from the second preset color.

Alternatively, the controlling module 930 is configured to:
control the key light corresponding to the target key indicated by the target key identifier to emit the light with the preset color and to flash.

Alternatively, the second character set includes at least two second characters, the controlling module 930 is configured to:
determine a correlation degree between each second character and the first character to obtain at least two correlation degrees;
control a key light corresponding to a target key indicated by a target key identifier corresponding to each second character to emit the light with the preset color;
in which a strength of a light emitted by a key light corresponding to any one target key is positively correlated with the correlation degree between a second character corresponding to the any one target key and the first character.

Alternatively, the second character set includes at least two second characters, the at least two second characters are arranged in sequence, the controlling module 930 is configured to:
control a key light corresponding to a target key indicated by a target key identifier corresponding to each second character to emit the light with the preset color in sequence according to an arrange sequence of the at least two second characters.

In conclusion, in the device for inputting character provided in the embodiments of the present disclosure, the key light on instruction is received, the key light on instruction including the second character in the second character set correlated with the first character determined according to the first character input by the user, and the second character set including at least one second character; the corresponding relationship between a character and a key identifier is inquired according to the key light on instruction to obtain the target key identifier corresponding to each second character; the key light corresponding to the target key indicated by the target key identifier is controlled to emit the light with the preset color, the light with the preset color for prompting the user to input character. With the embodiments of the present disclosure, by controlling the key light corresponding to the target key indicated by the target key identifier to emit the light with the preset color so as to prompt the user to input character, the problems of low inputting efficiency and input error in the related art are solved, and thus effects of improving the inputting efficiency and avoiding the input error are achieved.

Fig. 10 is a block diagram of a device 1000 for inputting character, according to yet another exemplary embodiment. The device 1000 for inputting character may be all or a part of a terminal in the implementation environment shown in Fig 1-1 realized by software, hardware or combinations thereof. Referring to Fig. 10, the device 1000 for inputting character may include: a first receiving module 1010, a determining module 1020, and a sending module 1030.

The first receiving module 1010 is configured to receive a first character input by a user.

The determining module 1020 is configured to determine a second character set correlated with the first character, the second character set including at least one second character.

The sending module 1030 is configured to send a key light on instruction, the key light on instruction including a second character in the second character set, such that a keyboard inquiries a corresponding relationship between a character and a key identifier to obtain a target key identifier corresponding to each second character according to the key light on instruction, and controls a key light corresponding to a target key indicated by the target key identifier to emit a light with a preset color, the light with the preset color for prompting the user to input character.

In conclusion, in the device for inputting character provided in the embodiments of the present disclosure, the first character input by the user is received; the second character set correlated with the first character is determined, the second character set including at least one second character; the key light on instruction is sent, the key light on instruction including the second character in the second character set, such that the keyboard inquiries the corresponding relationship between a character and a key identifier to obtain the target key identifier corresponding to each second character according to the key light on instruction, and controls the key light corresponding to the target key indicated by the target key identifier to emit the light with the preset color, the light with the preset color for prompting the user to input character. With the embodiments of the present disclosure, by controlling the key light corresponding to the target key indicated by the target key identifier to emit the light with the preset color so as to prompt the user to input character, the problems of low inputting efficiency and input error in the related art are solved, and thus effects of improving the inputting efficiency and avoiding the input error are achieved.

Fig. 11 is a block diagram of a device 1100 for inputting character, according to yet another exemplary embodiment. The device 1100 for inputting character may be all or a part of a terminal in the implementation environment shown in Fig 1-1 realized by software, hardware or combinations thereof. Referring to Fig. 11, the device 1100 for inputting character may include: a first receiving module 1110, a determining module 1120, and a sending module 1130.

The first receiving module 1110 is configured to receive a first character input by a user.

The determining module 1120 is configured to determine a second character set correlated with the first character, the second character set including at least one second character.

The sending module 1130 is configured to send a key light on instruction, the key light on instruction including a second character in the second character set, such that a keyboard inquiries a corresponding relationship between a character and a key identifier to obtain a target key identifier corresponding to each second character according to the key light on instruction, and controls a key light corresponding to a target key indicated by the target key identifier to emit a light with a preset color, the light with the preset color for prompting the user to input character.

Alternatively, the determining module 1120 is configured to:
determine a target word-stock, the target word-stock being a word-stock corresponding to an input method currently used by the user or a word-stock established by words input by the user, and the target word-stock for recording a correlation relationship between different characters;
obtain the second character set by inquiring the target word-stock according to the first character.

Alternatively, further with reference to Fig. 11, the device 1100 for inputting character may further include: a second receiving module 1140, a judging module 1150, an updating module 1160.

The second receiving module 1140 is configured to receive a third character input by the user.

The judging module 1150 is configured to judge whether a character identical to the third character exists in the second character set.

The updating module 1160 is configured to update the target word-stock according to the first character and the third character, if the character identical to the third character does not exist in the second character set.

Alternatively, the updating module 1160 is configured to:
send an enquiry request to a server, the enquiry request including an item to be inquired consisting of the first character and the third character arranged in sequence;
receive an enquiry response sent from the server, the enquiry response generated by inquiring a word-stock in the server by the server;
record a correlation relationship between the first character and the third character in the target word-stock, if the enquiry response indicates that the item to be inquired exists in the word-stock in the server.

Alternatively, the updating module 1160 is configured to:
display update promoting information to the user;
receive an update instruction triggered by the user according to the update promoting information, the update instruction including an item to be inquired consisting of the first character and the third character arranged in sequence;
record a correlation relationship between the first character and the third character in the target word-stock.

In conclusion, in the device for inputting character provided in the embodiments of the present disclosure, the first character input by the user is received; the second character set correlated with the first character is determined, the second character set including at least one second character; the key light on instruction is sent, the key light on instruction including the second character in the second character set, such that the keyboard inquiries the corresponding relationship between a character and a key identifier to obtain the target key identifier corresponding to each second character according to the key light on instruction, and controls the key light corresponding to the target key indicated by the target key identifier to emit the light with the preset color, the light with the preset color for prompting the user to input character. With the embodiments of the present disclosure, by controlling the key light corresponding to the target key indicated by the target key identifier to emit the light with the preset color so as to prompt the user to input character, the problems of low inputting efficiency and input error in the related art are solved, and thus effects of improving the inputting efficiency and avoiding the input error are achieved.

Fig. 12 is a block diagram of a device 1200 for inputting character, according to an exemplary embodiment. For example, the device 1200 may be a keyboard integrated with a processor, the keyboard may be disposed in a cell phone, a mobile phone, a digital broadcast terminal, a messaging device, a gaming console, a medical device, exercise equipment, a personal digital as assistant, a desktop computer, a portable laptop computer, a notebook computer, a smart television, a smart wearable device and the like, which is not limited by the embodiments of the present disclosure.

Referring to Fig. 12, the device 1200 may include one or more of the following components: a processing component 1202, a memory 1204, a power component 1206, an input/output (I/O) interface 1208, a sensor component 1210, and a communication component 1212.

The processing component 1202 typically controls overall operations of the device 1200, such as the operations associated with communications, processing and recording operations. The processing component 1202 may include one or more processors 1220 to execute instructions to perform all or part of the steps in the above described methods. Moreover, the processing component 1202 may include one or more modules which facilitate the interaction between the processing component 1202 and other components.

The memory 1204 is configured to store various types of data to support the operation of the device 1200. Examples of such data include instructions for any applications or methods operated on the device 1200, contact data, phonebook data, messages, pictures, video, etc. The memory 1204 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 1206 provides power to various components of the device 1200. The power component 1206 may include a power management system, one or more power sources, and any other components associated with the generation, management, and distribution of power in the device 1200.

The I/O interface 1208 provides an interface between the processing component 1202 and peripheral interface modules. The peripheral interface may be a keyboard.

The sensor component 1210 includes one or more sensors to provide status assessments of various aspects of the device 1200. For instance, the sensor component 1210 may detect an open/closed status of the device 1200, relative positioning of components, e.g., the display and the keypad, of the device 1200, a change in position of the device 1200 or a component of the device 1200, a presence or absence of user contact with the device 1200, an orientation or an acceleration/deceleration of the device 1200, and a change in temperature of the device 1200. The sensor component 1210 may include a proximity sensor configured to detect the presence of nearby objects without any physical contact. The sensor component 1210 may also include a light sensor, such as a CMOS or CCD image sensor, for use in imaging applications. In some embodiments, the sensor component 1210 may also include an accelerometer sensor, a gyroscope sensor, a magnetic sensor, a pressure sensor, or a temperature sensor.

The communication component 1212 is configured to facilitate communication, wired or wirelessly, between the device 1200 and other devices. The device 1200 can access a wireless network based on a communication standard, such as WiFi, 2G, or 3G, or a combination thereof. In one exemplary embodiment, the communication component 1212 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the device 1200 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer-readable storage medium including instructions, such as included in the memory 1204, executable by the processor 1220 in the device 1200, for performing the above-described methods. For example, the non-transitory computer-readable storage medium may be a ROM, a RAM, a CD-ROM, a magnetic tape, a floppy disc, an optical data storage device, and the like.

A non-transitory computer readable storage medium includes instructions executable by the processor of the device 1200 to make the device 1200 perform the above-described methods for inputting character. The method includes:
receiving a first character input by a user;
determining a second character set correlated with the first character, the second character set including at least one second character;
inquiring a corresponding relationship between a character and a key identifier to obtain a target key identifier corresponding to each second character;
controlling a key light corresponding to a target key indicated by the target key identifier to emit a light with a preset color, the light with the preset color for prompting the user to input character.

Alternatively, determining a second character set correlated with the first character, the second character set including at least one second character, includes:
determining a target word-stock, the target word-stock being a word-stock corresponding to an input method currently used by the user or a word-stock established by words input by the user, and the target word-stock for recording a correlation relationship between different characters;
obtaining the second character set by inquiring the target word-stock according to the first character.

Alternatively, the method further includes:
receiving a third character input by the user;
judging whether a character identical to the third character exists in the second character set;
updating the target word-stock according to the first character and the third character, if the character identical to the third character does not exist in the second character set.

Alternatively, updating the target word-stock according to the first character and the third character, includes:
sending an enquiry request to a server, the enquiry request including an item to be inquired consisting of the first character and the third character arranged in sequence;
receiving an enquiry response sent from the server, the enquiry response generated by inquiring a word-stock in the server by the server;
recording a correlation relationship between the first character and the third character in the target word-stock, if the enquiry response indicates that the item to be inquired exists in the word-stock in the server.

Alternatively, updating the target word-stock according to the first character and the third character, includes:
displaying update promoting information to the user;
receiving an update instruction triggered by the user according to the update promoting information, the update instruction including an item to be inquired consisting of the first character and the third character arranged in sequence;
recording a correlation relationship between the first character and the third character in the target word-stock.

Alternatively, controlling a key light corresponding to a target key indicated by the target key identifier to emit a light with a preset color, includes:
controlling the key light corresponding to the target key indicated by the target key identifier on and to emit the light with the preset color;
controlling key lights corresponding to keys on a keyboard other than the target key off.

Alternatively, keys on a keyboard include function keys, and controlling a key light corresponding to a target key indicated by the target key identifier to emit a light with a preset color, includes:
controlling the key light corresponding to the target key indicated by the target key identifier to emit a light with a first preset color;
controlling key lights corresponding to the function keys to emit a light with a second preset color;
controlling key lights corresponding to keys on a keyboard other than the target key and the function keys to emit a light with a third preset color;
in which the first preset color, the second preset color and the third preset color are different from each other.

Alternatively, keys on a keyboard include function keys, and controlling a key light corresponding to a target key indicated by the target key identifier to emit a light with a preset color, includes:
controlling the key light corresponding to the target key indicated by the target key identifier to emit a light with a first preset color;
controlling key lights corresponding to the function keys to emit a light with a second preset color;
controlling key lights corresponding to keys on a keyboard other than the target key and the function keys off;
in which the first preset color is different from the second preset color.

Alternatively, controlling a key light corresponding to a target key indicated by the target key identifier to emit a light with a preset color, includes:
controlling the key light corresponding to the target key indicated by the target key identifier to emit the light with the preset color and to flash.

Alternatively, the second character set includes at least two second characters,
controlling a key light corresponding to a target key indicated by the target key identifier to emit a light with a preset color, includes:
determining a correlation degree between each second character and the first character respectively to obtain at least two correlation degrees;
controlling a key light corresponding to a target key indicated by the target key identifier corresponding to each second character to emit the light with the preset color;
in which a strength of a light emitted by a key light corresponding to any one target key is positively correlated with the correlation degree between a second character corresponding to the any one target key and the first character.

Alternatively, the second character set includes at least two second characters, the at least two second characters are arranged in sequence,
controlling a key light corresponding to a target key indicated by the target key identifier to emit a light with a preset color, includes:
controlling a key light corresponding to a target key indicated by a target key identifier corresponding to each second character to emit the light with the preset color in sequence according to an arrange sequence of the at least two second characters.

In conclusion, with the device for inputting character provided in the embodiments of the present disclosure, the first character input by the user is received; the second character set correlated with the first character is determined, the second character set including at least one second character; by inquiring the corresponding relationship between a character and a key identifier, the target key identifier corresponding to each second character is obtained; and the key light corresponding to a target key indicated by the target key identifier is controlled to emit the light with the preset color, the light with the preset color for prompting the user to input character. With the embodiments of the present disclosure, by controlling the key light corresponding to the target key indicated by the target key identifier to emit the light with the preset color so as to prompt the user to input character, the problems of low inputting efficiency and input error in the related art are solved, and thus effects of improving the inputting efficiency and avoiding the input error are achieved.

Fig. 13 is a block diagram of a device 1300 for inputting character, according to another exemplary embodiment. For example, the device 1300 may be a keyboard, the keyboard may be disposed in a cell phone, a mobile phone, a digital broadcast terminal, a messaging device, a gaming console, a medical device, exercise equipment, a personal digital as assistant, a desktop computer, a portable laptop computer, a notebook computer, a smart television, a smart wearable device and the like, which is not limited by the embodiments of the present disclosure.

Referring to Fig. 13, the device 1300 may include one or more of the following components: a processing component 1302, a memory 1304, a power component 1306, an input/output (I/O) interface 1308, a sensor component 1310, and a communication component 1312.

The processing component 1302 typically controls overall operations of the device 1300, such as the operations associated with communications, processing and recording operations. The processing component 1302 may include one or more processors 1320 to execute instructions to perform all or part of the steps in the above described methods. Moreover, the processing component 1302 may include one or more modules which facilitate the interaction between the processing component 1302 and other components.

The memory 1304 is configured to store various types of data to support the operation of the device 1300. Examples of such data include instructions for any applications or methods operated on the device 1300, contact data, phonebook data, messages, pictures, video, etc. The memory 1304 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 1306 provides power to various components of the device 1300. The power component 1306 may include a power management system, one or more power sources, and any other components associated with the generation, management, and distribution of power in the device 1300.

The I/O interface 1308 provides an interface between the processing component 1302 and peripheral interface modules. The peripheral interface may be a keyboard.

The sensor component 1310 includes one or more sensors to provide status assessments of various aspects of the device 1300. For instance, the sensor component 1310 may detect an open/closed status of the device 1300, relative positioning of components, e.g., the display and the keypad, of the device 1300, a change in position of the device 1300 or a component of the device 1300, a presence or absence of user contact with the device 1300, an orientation or an acceleration/deceleration of the device 1300, and a change in temperature of the device 1300. The sensor component 1310 may include a proximity sensor configured to detect the presence of nearby objects without any physical contact. The sensor component 1310 may also include a light sensor, such as a CMOS or CCD image sensor, for use in imaging applications. In some embodiments, the sensor component 1310 may also include an accelerometer sensor, a gyroscope sensor, a magnetic sensor, a pressure sensor, or a temperature sensor.

The communication component 1312 is configured to facilitate communication, wired or wirelessly, between the device 1300 and other devices. The device 1300 can access a wireless network based on a communication standard, such as WiFi, 2G, or 3G, or a combination thereof. In one exemplary embodiment, the communication component 1312 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the device 1300 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer-readable storage medium including instructions, such as included in the memory 1304, executable by the processor 1320 in the device 1300, for performing the above-described methods. For example, the non-transitory computer-readable storage medium may be a ROM, a RAM, a CD-ROM, a magnetic tape, a floppy disc, an optical data storage device, and the like.

A non-transitory computer readable storage medium includes instructions executable by the processor of the device 1300 to make the device 1300 perform the above-described methods for inputting character. The method includes:
receiving a key light on instruction, the key light on instruction including a second character in a second character set correlated with a first character and determined according to the first character input by a user, and the second character set including at least one second character;
inquiring a corresponding relationship between a character and a key identifier according to the key light on instruction to obtain a target key identifier corresponding to each second character;
controlling a key light corresponding to a target key indicated by the target key identifier to emit a light with a preset color, the light with the preset color for prompting the user to input character.

Alternatively, controlling a key light corresponding to a target key indicated by the target key identifier to emit a light with a preset color, includes:
controlling the key light corresponding to the target key indicated by the target key identifier on and to emit the light with the preset color;
controlling key lights corresponding to keys on a keyboard other than the target key off.

Alternatively, keys on a keyboard include function keys, and controlling a key light corresponding to a target key indicated by the target key identifier to emit a light with a preset color, includes:
controlling the key light corresponding to the target key indicated by the target key identifier to emit a light with a first preset color;
controlling key lights corresponding to the function keys to emit a light with a second preset color;
controlling key lights corresponding to keys on a keyboard other than the target key and the function keys to emit a light with a third preset color;
in which the first preset color, the second preset color and the third preset color are different from each other.

Alternatively, keys on a keyboard include function keys, and controlling a key light corresponding to a target key indicated by the target key identifier to emit a light with a preset color, includes:
controlling the key light corresponding to the target key indicated by the target key identifier to emit a light with a first preset color;
controlling key lights corresponding to the function keys to emit a light with a second preset color;
controlling key lights corresponding to keys on a keyboard other than the target key and the function keys off;
in which the first preset color is different from the second preset color.

Alternatively, controlling a key light corresponding to a target key indicated by the target key identifier to emit a light with a preset color, includes:
controlling the key light corresponding to the target key indicated by the target key identifier to emit the light with the preset color and to flash.

Alternatively, the second character set includes at least two second characters,
controlling a key light corresponding to a target key indicated by the target key identifier to emit a light with a preset color, includes:
determining a correlation degree between each second character and the first character respectively to obtain at least two correlation degrees;
controlling a key light corresponding to a target key indicated by a target key identifier corresponding to each second character to emit the light with the preset color;
in which a strength of a light emitted by a key light corresponding to any one target key is positively correlated with the correlation degree between a second character corresponding to the any one target key and the first character.

Alternatively, the second character set includes at least two second characters, the at least two second characters are arranged in sequence,
controlling a key light corresponding to a target key indicated by the target key identifier to emit a light with a preset color, includes:
controlling a key light corresponding to a target key indicated by a target key identifier corresponding to each second character to emit the light with the preset color in sequence according to an arrange sequence of the at least two second characters.

In conclusion, in the device for inputting character provided in the embodiments of the present disclosure, the key light on instruction is received, the key light on instruction including the second character in the second character set correlated with the first character and determined according to the first character input by the user, and the second character set including at least one second character; the corresponding relationship between a character and a key identifier is inquired according to the key light on instruction to obtain the target key identifier corresponding to each second character; the key light corresponding to the target key indicated by the target key identifier is controlled to emit the light with the preset color, the light with the preset color for prompting the user to input character. With the embodiments of the present disclosure, by controlling the key light corresponding to the target key indicated by the target key identifier to emit the light with the preset color so as to prompt the user to input character, the problems of low inputting efficiency and input error in the related art are solved, and thus effects of improving the inputting efficiency and avoiding the input error are achieved.

Fig. 14 is a block diagram of a device 1400 for inputting character, according to an exemplary embodiment. For example, the device 1400 may be a terminal, the terminal may be disposed in a cell phone, a mobile phone, a digital broadcast terminal, a messaging device, a gaming console, a medical device, exercise equipment, a personal digital as assistant, a desktop computer, a portable laptop computer, a notebook computer, a smart television, a smart wearable device and the like, which is not limited by the embodiments of the present disclosure.

Referring to Fig. 14, the device 1400 may include one or more of the following components: a processing component 1402, a memory 1404, a power component 1406, a multimedia component 1408, an audio component 1410, an input/output (I/O) interface 1412, a sensor component 1414, and a communication component 1416.

The processing component 1402 typically controls overall operations of the device 1400, such as the operations associated with display, telephone calls, data communications, camera operations, and recording operations. The processing component 1402 may include one or more processors 1420 to execute instructions to perform all or part of the steps in the above described methods. Moreover, the processing component 1402 may include one or more modules which facilitate the interaction between the processing component 1402 and other components. For instance, the processing component 1402 may include a multimedia module to facilitate the interaction between the multimedia component 808 and the processing component 1402.

The memory 1404 is configured to store various types of data to support the operation of the device 1400. Examples of such data include instructions for any applications or methods operated on the device 1400, contact data, phonebook data, messages, pictures, video, etc. The memory 1404 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 1406 provides power to various components of the device 1400. The power component 1406 may include a power management system, one or more power sources, and any other components associated with the generation, management, and distribution of power in the device 1400.

The multimedia component 1408 includes a screen configured to provide an output interface between the device 1400 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action.

The audio component 1410 is configured to output and/or input audio signals. For example, the audio component 1410 includes a microphone ("MIC") configured to receive an external audio signal when the device 1400 is in an operation mode, such as a call mode, a recording mode, and a voice recognition mode. The received audio signal may be further stored in the memory 1404 or transmitted via the communication component 1416. In some embodiments, the audio component 1410 further includes a loud speaker to output audio signals.

The I/O interface 1412 is configured to provide an interface between the processing component 1402 and peripheral interface modules, such as a keyboard, a click wheel, buttons, and the like. The buttons may include, but are not limited to, a home button, a volume button, a starting button, and a locking button.

The sensor component 1410 includes one or more sensors to provide status assessments of various aspects of the device 1400. For instance, the sensor component 1410 may detect an open/closed status of the device 1400, relative positioning of components, e.g., the display and the keypad, of the device 1400, a change in position of the device 1400 or a component of the device 1400, a presence or absence of user contact with the device 1400, an orientation or an acceleration/deceleration of the device 1400, and a change in temperature of the device 1400. The sensor component 1410 may include a proximity sensor configured to detect the presence of nearby objects without any physical contact. The sensor component 1410 may also include a light sensor, such as a CMOS or CCD image sensor, for use in imaging applications. In some embodiments, the sensor component 1410 may also include an accelerometer sensor, a gyroscope sensor, a magnetic sensor, a pressure sensor, or a temperature sensor.

The communication component 1416 is configured to facilitate communication, wired or wirelessly, between the device 1400 and other devices. The device 1400 can access a wireless network based on a communication standard, such as WiFi, 2G, or 3G, or a combination thereof. In one exemplary embodiment, the communication component 1416 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the device 1400 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer-readable storage medium including instructions, such as included in the memory 1404, executable by the processor 1420 in the device 1400, for performing the above-described methods. For example, the non-transitory computer-readable storage medium may be a ROM, a RAM, a CD-ROM, a magnetic tape, a floppy disc, an optical data storage device, and the like.

A non-transitory computer readable storage medium includes instructions executable by the processor of the device 1400 to make the device 1400 perform the above-described methods for inputting character. The method includes:
receiving a first character input by a user;
determining a second character set correlated with the first character, the second character set including at least one second character;
sending a key light on instruction, the key light on instruction including a second character in the second character set, such that a keyboard inquiries a corresponding relationship between a character and a key identifier to obtain a target key identifier corresponding to each second character according to the key light on instruction, and controls a key light corresponding to a target key indicated by the target key identifier to emit a light with a preset color, the light with the preset color for prompting the user to input character.

Alternatively, determining a second character set correlated with the first character, the second character set including at least one second character, includes:
determining a target word-stock, the target word-stock being a word-stock corresponding to an input method currently used by the user or a word-stock established by words input by the user, and the target word-stock for recording a correlation relationship between different characters;
obtaining the second character set by inquiring the target word-stock according to the first character.

Alternatively, the method further includes:
receiving a third character input by the user;
judging whether a character identical to the third character exists in the second character set;
updating the target word-stock according to the first character and the third character, if the character identical to the third character does not exist in the second character set.

Alternatively, updating the target word-stock according to the first character and the third character, includes:
sending an enquiry request to a server, the enquiry request including an item to be inquired consisting of the first character and the third character arranged in sequence;
receiving an enquiry response sent from the server, the enquiry response generated by inquiring a word-stock in the server by the server;
recording a correlation relationship between the first character and the third character in the target word-stock, if the enquiry response indicates that the item to be inquired exists in the word-stock in the server.

Alternatively, updating the target word-stock according to the first character and the third character, includes:
displaying update promoting information to the user;
receiving an update instruction triggered by the user according to the update promoting information, the update instruction including an item to be inquired consisting of the first character and the third character arranged in sequence;
recording a correlation relationship between the first character and the third character in the target word-stock.

In conclusion, in the device for inputting character provided in the embodiments of the present disclosure, the first character input by the user is received; the second character set correlated with the first character is determined, the second character set including at least one second character; the key light on instruction is sent, the key light on instruction including the second character in the second character set, such that the keyboard inquiries the corresponding relationship between a character and a key identifier to obtain the target key identifier corresponding to each second character according to the key light on instruction, and controls the key light corresponding to the target key indicated by the target key identifier to emit the light with the preset color, the light with the preset color for prompting the user to input character. With the embodiments of the present disclosure, by controlling the key light corresponding to the target key indicated by the target key identifier to emit the light with the preset color so as to prompt the user to input character, the problems of low inputting efficiency and input error in the related art are solved, and thus effects of improving the inputting efficiency and avoiding the input error are achieved.

Fig. 15 is a block diagram of a system 1500 for inputting character, according to an exemplary embodiment. Referring to Fig. 15, the system 1500 for inputting character may include: a keyboard 1510 and a processor 1520 in a terminal.

In a realizable implementation, the keyboard 1510 includes the device for inputting character shown in Fig. 9; the processor 1520 in the terminal includes the device for inputting character shown in Fig. 10 or Fig. 11.

In another realizable implementation, the keyboard 1510 includes the device for inputting character shown in Fig. 13; the processor 1520 in the terminal includes the device for inputting character shown in Fig. 14.

In conclusion, in the system for inputting character provided in the embodiments of the present disclosure, the first character input by the user is received; the second character set correlated with the first character is determined, the second character set including at least one second character; by inquiring the corresponding relationship between a character and a key identifier, the target key identifier corresponding to each second character is obtained; and the key light corresponding to the target key indicated by the target key identifier is controlled to emit the light with the preset color, the light with the preset color for prompting the user to input character. With the embodiments of the present disclosure, by controlling the key light corresponding to the target key indicated by the target key identifier to emit the light with the preset color so as to prompt the user to input character, the problems of low inputting efficiency and input error in the related art are solved, and thus effects of improving the inputting efficiency and avoiding the input error are achieved.

Where functional modules are referred to in apparatus embodiments for carrying out various steps of the described method(s) it will be understood that these modules may be implemented in hardware, in software, or a combination of the two. When implemented in hardware, the modules may be implemented as one or more hardware modules, such as one or more application specific integrated circuits. When implemented in software, the modules may be implemented as one or more computer programs that are executed on one or more processors.

Other embodiments of the invention will be apparent to those skilled in the art from consideration of the specification and practice of the invention disclosed here. This application is intended to cover any variations, uses, or adaptations of the invention following the general principles thereof and including such departures from the present disclosure as come within known or customary practice in the art.

## Claims

1. A method for inputting character, comprising:
receiving a first character input by a user (201; 501);
determining a second character set correlated with the first character, the second character set comprising at least one second character (202; 502);
inquiring a corresponding relationship between a character and a key identifier to obtain a target key identifier corresponding to each second character (203; 503);
controlling a key light corresponding to a target key indicated by the target key identifier to emit a light with a preset color, the light with the preset color for prompting the user to input character (204; 504).

2. The method according to claim 1, wherein determining a second character set correlated with the first character, the second character set comprising at least one second character (202; 502), comprises:
determining a target word-stock, the target word-stock being a word-stock corresponding to an input method currently used by the user or a word-stock established by words input by the user, and the target word-stock for recording a correlation relationship between different characters (5021);
obtaining the second character set by inquiring the target word-stock according to the first character (5022).

3. The method according to claim 2, further comprising:
receiving a third character input by the user (505);
judging whether a character identical to the third character exists in the second character set (506);
updating the target word-stock according to the first character and the third character, if the character identical to the third character does not exist in the second character set (507).

4. The method according to claim 3, wherein updating the target word-stock according to the first character and the third character (507), comprises:
sending an enquiry request to a server (5071a), the enquiry request comprising an item to be inquired consisting of the first character and the third character arranged in sequence;
receiving an enquiry response sent from the server (5076a), the enquiry response generated by inquiring a word-stock in the server by the server;
recording a correlation relationship between the first character and the third character in the target word-stock, if the enquiry response indicates that the item to be inquired exists in the word-stock in the server (5077a).

5. The method according to claim 3, wherein updating the target word-stock according to the first character and the third character (507), comprises:
displaying update promoting information to the user (5071b);
receiving an update instruction triggered by the user according to the update promoting information, the update instruction comprising an item to be inquired consisting of the first character and the third character arranged in sequence (5072b);
recording a correlation relationship between the first character and the third character in the target word-stock (5073b).

6. The method according to any of claims 1 to 5, wherein the second character set comprises at least two second characters,
controlling a key light corresponding to a target key indicated by the target key identifier to emit a light with a preset color (204; 504), comprises:
determining a correlation degree between each second character and the first character respectively to obtain at least two correlation degrees (5041e);
controlling a key light corresponding to a target key indicated by a target key identifier corresponding to each second character to emit the light with the preset color (5042e);
wherein a strength of a light emitted by a key light corresponding to any one target key is positively correlated with the correlation degree between a second character corresponding to the any one target key and the first character.

7. The method according to any of claims 1 to 5, wherein the second character set comprises at least two second characters, the at least two second characters are arranged in sequence,
controlling a key light corresponding to a target key indicated by the target key identifier to emit a light with a preset color (204; 504), comprises:
controlling a key light corresponding to a target key indicated by a target key identifier corresponding to each second character to emit the light with the preset color in sequence according to an arrange sequence of the at least two second characters (5041f).

8. A method for inputting character, comprising:
receiving a key light on instruction, the key light on instruction comprising a second character in a second character set correlated with a first character and determined according to the first character input by a user, and the second character set comprising at least one second character;
inquiring a corresponding relationship between a character and a key identifier according to the key light on instruction to obtain a target key identifier corresponding to each second character;
controlling a key light corresponding to a target key indicated by the target key identifier to emit a light with a preset color, the light with the preset color for prompting the user to input character.

9. The method according to claim 8, wherein
controlling a key light corresponding to a target key indicated by the target key identifier to emit a light with a preset color, comprises:
controlling the key light corresponding to the target key indicated by the target key identifier on and to emit the light with the preset color;
controlling key lights corresponding to keys on a keyboard other than the target key off.

10. The method according to claim 8 or 9, wherein keys on a keyboard comprise function keys, and controlling a key light corresponding to a target key indicated by the target key identifier to emit a light with a preset color, comprises:
controlling the key light corresponding to the target key indicated by the target key identifier to emit a light with a first preset color;
controlling key lights corresponding to the function keys to emit a light with a second preset color;
controlling key lights corresponding to keys on a keyboard other than the target key and the function keys to emit a light with a third preset color;
wherein the first preset color, the second preset color and the third preset color are different from each other.

11. The method according to any of claims 8 to 10, wherein keys on a keyboard comprise function keys, and controlling a key light corresponding to a target key indicated by the target key identifier to emit a light with a preset color, comprises:
controlling the key light corresponding to the target key indicated by the target key identifier to emit a light with a first preset color;
controlling key lights corresponding to the function keys to emit a light with a second preset color;
controlling key lights corresponding to keys on a keyboard other than the target key and the function keys off;
wherein the first preset color is different from the second preset color.

12. The method according to any of claims 8 to 11, wherein the second character set comprises at least two second characters,
controlling a key light corresponding to a target key indicated by a target key identifier to emit a light with a preset color, comprises:
determining a correlation degree between each second character and the first character respectively to obtain at least two correlation degrees;
controlling a key light corresponding to a target key indicated by the target key identifier corresponding to each second character to emit the light with the preset color;
wherein a strength of a light emitted by a key light corresponding to any one target key is positively correlated with the correlation degree between a second character corresponding to the any one target key and the first character.

13. The method according to any of claims 8 to 12, wherein the second character set comprises at least two second characters, the at least two second characters are arranged in sequence,
controlling a key light corresponding to a target key indicated by the target key identifier to emit a light with a preset color, comprises:
controlling a key light corresponding to a target key indicated by a target key identifier corresponding to each second character to emit the light with the preset color in sequence according to an arrange sequence of the at least two second characters.

14. A device for inputting character, comprising:
a first receiving module configured to receive a first character input by a user;
a determining module configured to determine a second character set correlated with the first character, the second character set comprising at least one second character;
an inquiring module configured to inquiry a corresponding relationship between a character and a key identifier to obtain a target key identifier corresponding to each second character;
a controlling module configured to control a key light corresponding to a target key indicated by the target key identifier to emit a light with a preset color, the light with the preset color for prompting the user to input character.

15. A device for inputting character, comprising:
a receiving module configured to receive a key light on instruction, the key light on instruction comprising a second character in a second character set correlated with a first character and determined according to the first character input by a user, and the second character set comprising at least one second character;
an inquiring module configured to inquiry a corresponding relationship between a character and a key identifier according to the key light on instruction to obtain a target key identifier corresponding to each second character;
a controlling module configured to control a key light corresponding to a target key indicated by the target key identifier to emit a light with a preset color, the light with the preset color for prompting the user to input character.
